# EUROPEAN PATENT APPLICATION

(11) **EP 4 280 657 A1**
(43) Date of publication of application: **22.11.2023**
(21) Application number: 21923835.9
(22) Date of filing: 08.02.2021
(51) Int. Cl.: H04W 24/02

(54) **COMMUNICATION METHOD BASED ON REFERENCE SIGNAL, AND RELATED APPARATUS**

(71) Applicant: Huawei Technologies Co., Ltd., Shenzhen, Guangdong 518129 (CN)
(72) Inventor: LIU, Mengting, Shenzhen, Guangdong 518129 (CN); HUANG, Su, Shenzhen, Guangdong 518129 (CN); CHANG, Junren, Shenzhen, Guangdong 518129 (CN)
(74) Representative: Gill Jennings & Every LLP
(86) International application number: PCT/CN2021/075927
(87) International publication number: WO 2022/165825

(57) **Abstract**

This application provides a communication method based on a reference signal, and a related apparatus. The method includes: obtaining first information, where the first information includes a first reference signal configuration information set, the first reference signal configuration information set includes one or more pieces of reference signal configuration information, and the one or more pieces of reference signal configuration information are reference signal configuration information requested by a terminal device on-demand; and sending second information to a first network device, where the second information includes a second reference signal configuration information set requested by the terminal device, and the second reference signal configuration information set includes one or more pieces of reference signal configuration information. Through implementation of embodiments of this application, a success rate of requesting reference signal configuration information by the terminal device is increased, thereby meeting a positioning requirement of the terminal device.

## Description

### TECHNICAL FIELD

This application relates to the field of positioning technologies, and in particular, to a communication method based on a reference signal, and a related apparatus.

### BACKGROUND

Currently, performance of positioning technologies depends to a large extent on a configuration of a reference signal. If a current configuration of the reference signal cannot meet a positioning performance requirement, a terminal device may change the configuration of the reference signal based on an on-demand (On-demand) request. For example, the terminal device may send, to a network, a message for requesting reference signal configuration information. The message for requesting reference signal configuration information indicates reference signal configuration information requested by the terminal device, for example, a pattern (pattern), on/off, a periodicity, or bandwidth.

In the foregoing process, the reference signal configuration information is determined by the terminal device, that is, the terminal device cannot determine whether the reference signal configuration information is appropriate (for example, whether the current network can provide the reference signal configuration information), whether the reference signal configuration information has been requested and successfully configured by another terminal device, or the like. As a result, a success rate of requesting the reference signal configuration information by the terminal device is low, and a positioning requirement of the terminal device cannot be met. Therefore, how to improve a success rate of requesting reference signal configuration by the terminal device to meet a positioning requirement of the terminal device becomes a technical problem to be urgently resolved in a current phase.

### SUMMARY

Embodiments of this application provide a communication method based on a reference signal, and a related apparatus, so that a success rate of requesting reference signal configuration information by a terminal device is increased, thereby meeting a positioning requirement of the terminal device.

According to a first aspect, a communication method based on a reference signal is provided, including:
obtaining first information, where the first information includes a first reference signal configuration information set, the first reference signal configuration information set includes one or more pieces of reference signal configuration information, and the one or more pieces of reference signal configuration information are reference signal configuration information requested by a terminal device on-demand; and
sending second information to a first network device, where the second information includes a second reference signal configuration information set requested by the terminal device, and the second reference signal configuration information set includes one or more pieces of reference signal configuration information.

It can be learned that, in the foregoing technical solution, the terminal device obtains the one or more pieces of reference signal configuration information that may be requested on demand, so as to send, to the first network device, the second reference signal configuration information set requested by the terminal device. That is, the terminal device may send the second information with reference to the first information, so that a success rate of requesting reference signal configuration information by the terminal device is increased, thereby meeting a positioning requirement of the terminal device.

Optionally, all or partial reference signal configuration information in the second reference signal configuration information set is included in the first reference signal configuration information set.

It can be learned that, in the foregoing technical solution, all or partial reference signal configuration information in the second reference signal configuration information set is included in the first reference signal configuration information set. In other words, a problem that the reference signal configuration information requested by the terminal device cannot be satisfied because the reference signal configuration information determined by the terminal device is improper (for example, a current network cannot provide the reference signal configuration information) is avoided, so that a success rate of requesting reference signal configuration information by the terminal device is increased, thereby meeting a positioning requirement of the terminal device.

Optionally, the method further includes:
receiving third information sent by the first network device, where the third information indicates the terminal device to send the second information to the first network device when a preset condition is met.

It can be learned that, in the foregoing technical solution, the terminal device receives the third information, so that the terminal device can send the second information to the first network device when the preset condition is met. This avoids a problem that power consumption of the terminal device increases and network efficiency decreases because the terminal device frequently requests the reference signal configuration information.

Optionally, the third information includes one or more of the following: a preset first reference signal strength, a preset second reference signal strength, a preset third reference signal strength, a preset first measurement result error, a preset second measurement result error, a preset third measurement result error, a preset first positioning precision, a preset second positioning precision, a preset third positioning precision, a preset first positioning precision error, a preset second positioning precision error, and a preset third positioning precision error.

Optionally, the preset condition includes one or more of the following:
a reference signal strength measured by the terminal device is less than or equal to the preset first reference signal strength;
a measurement result error of the terminal device is greater than or equal to the preset first measurement result error;
a positioning precision measured by the terminal device is less than or equal to the preset first positioning precision; and
a positioning precision error measured by the terminal device is greater than or equal to the preset first positioning precision error.

Optionally, the preset condition includes one or more of the following:
a reference signal strength measured by the terminal device is less than or equal to the preset second reference signal strength, and the reference signal strength measured by the terminal device is greater than or equal to the preset third reference signal strength;
a measurement result error of the terminal device is less than or equal to the preset second measurement result error, and the measurement result error of the terminal device is greater than or equal to the preset third measurement result error;
a positioning precision measured by the terminal device is less than or equal to the preset second positioning precision, and the positioning precision measured by the terminal device is greater than or equal to the preset third positioning precision; and
a positioning precision error measured by the terminal device is less than or equal to the preset second positioning precision error, and the positioning precision error measured by the terminal device is greater than or equal to the preset third positioning precision error.

Optionally, the method further includes:
receiving fourth information sent by a second network device, where the fourth information includes a reference signal configuration information set of the second network device and/or a third reference signal configuration information set, the reference signal configuration information set of the second network device includes one or more pieces of reference signal configuration information sent by the second network device, and the third reference signal configuration information set includes the one or more pieces of reference signal configuration information requested by the terminal device on-demand; and
the sending second information to a first network device includes:
   sending the second information to the first network device based on the fourth information.

It can be learned that, in the foregoing technical solution, the terminal device obtains the fourth information, so that the terminal device may send the second information to the first network device based on the latest reference signal configuration information set that is being used by a network in a current phase, and/or information about whether the reference signal configuration information has been requested and successfully configured by another terminal device, and/or information such as reference signal configuration information set that can be requested by the terminal equipment, so that a success rate of requesting the reference signal configuration information by the terminal device is increased, thereby meeting meet a positioning requirement of the terminal device. In addition, this avoids a problem that power consumption of the terminal device increases and network efficiency decreases because the terminal device frequently requests the reference signal configuration information.

Optionally, all or partial reference signal configuration information in the third reference signal configuration information set is included in the first reference signal configuration information set.

Optionally, the first information includes first assistance information, and the first assistance information includes one or more of the following information: one or more pieces of frequency layer information, one or more pieces of sending-receiving node information, one or more pieces of reference signal resource set information, and one or more pieces of reference signal resource information.

It can be learned that, in the foregoing technical solution, because the first information includes the first assistance information, the first assistance information includes configuration information at different granularities (for example, one or more of the following: frequency layer information, sending-receiving node information, reference signal resource set information, and reference signal resource information), so that the terminal device can flexibly refer to configuration information at different granularities.

Optionally, the first information includes second assistance information, the second assistance information is predefined assistance information, and the second assistance information includes one or more of the following information: one or more pieces of frequency layer information, one or more pieces of sending-receiving node information, one or more pieces of reference signal resource set information, and one or more pieces of reference signal resource information.

It can be learned that, in the foregoing technical solution, because the first information includes the second assistance information, the second assistance information is predefined assistance information. That is, the second assistance information may be carried in a new protocol, so that backward compatibility can be improved. In addition, the second assistance information includes configuration information at different granularities (for example, one or more of the following: frequency layer information, sending-receiving node information, reference signal resource set information, and reference signal resource information), so that the terminal device can flexibly refer to configuration information at different granularities.

Optionally, the frequency layer information includes one or more of the following information: frequency layer identification information, subcarrier spacing information, bandwidth information, a start physical resource block location, frequency information, spacing information, cyclic prefix information, and the sending-receiving node information.

Optionally, the sending-receiving node information includes one or more of the following information: reference signal identification information, cell identification information, frequency information, reference signal sending start time information, reference signal time difference RSTD information, reference signal time difference uncertainty RSTD-uncertainty information, and the reference signal resource set information.

Optionally, the reference signal resource set information includes one or more of the following information: reference signal resource set identification information, periodicity information, interval information, density information, a symbol quantity, information indicating that simultaneous sending is not supported, information indicating that simultaneous receiving is not supported, power information, and the reference signal resource information; the information indicating that simultaneous sending is not supported means that during sending of the reference signal by the terminal, sending of other information or a reference signal other than the reference signal is not supported; and the information indicating that simultaneous receiving is not supported means that during receiving of the reference signal, receiving of other information or a reference signal other than the reference signal is not supported.

Optionally, the reference signal resource information includes one or more of the following information: a reference signal resource identifier, reference signal sequence identification information, interval information, and reference signal resource sending/receiving start time information.

Optionally, the first assistance information is included in signaling NR-DL-PRS-AssistanceData-r16.

It can be learned that, in the foregoing technical solution, the first assistance information is included in the signaling NR-DL-PRS-AssistanceData-r16, that is, the first assistance information may be included in an existing protocol. Therefore, an impact on the existing protocol is small.

Optionally, the second information further includes one or more of the following: a priority of a frequency layer, a priority of a sending-receiving node, a priority of a reference signal resource set, and a priority of a reference signal resource.

It can be learned that, in the foregoing technical solution, the second information may include priority information at different granularities (for example, one or more of the following: the priority of the frequency layer, the priority of the sending-receiving node, the priority of the reference signal resource set, and the priority of the reference signal resource), so that the second network device can learn of priority information at different granularities, thereby providing help for a network to configure a reference signal.

Optionally, the second information further includes one or more of the following: an identifier of a secondary cell, an identifier of an activated bandwidth part BWP resource of the secondary cell, configuration information of the activated BWP resource of the secondary cell, an identifier of a deactivated BWP resource of the secondary cell, and configuration information of the deactivated BWP resource of the secondary cell.

It can be learned that, in the foregoing technical solution, the second information may include an identifier of a secondary cell, an identifier of an activated BWP resource of the secondary cell, and the like, so that the second network device can learn of the identifier of the secondary cell, the identifier of the activated BWP resource of the secondary cell, and the like, thereby providing help for a network to configure a reference signal.

According to a second aspect, a communication method based on a reference signal is provided, including:
sending first information to a terminal device, where the first information includes a first reference signal configuration information set, the first reference signal configuration information set includes one or more pieces of reference signal configuration information, and the one or more pieces of reference signal configuration information are reference signal configuration information requested by the terminal device on-demand; and
receiving second information sent by the terminal device, where the second information includes a second reference signal configuration information set requested by the terminal device, and the second reference signal configuration information set includes one or more pieces of reference signal configuration information.

It can be learned that, in the foregoing technical solution, the first network device sends, to the terminal device, one or more pieces of reference signal configuration information that can be requested on demand, so that the terminal device learns of the one or more pieces of reference signal configuration information that can be requested on demand. Therefore, the second reference signal configuration information set requested by the terminal device may be sent to the first network device. That is, the terminal device may send the second information with reference to the first information, so that a success rate of requesting reference signal configuration information by the terminal device is increased, thereby meeting a positioning requirement of the terminal device.

Optionally, all or partial reference signal configuration information in the second reference signal configuration information set is included in the first reference signal configuration information set.

It can be learned that, in the foregoing technical solution, all or partial reference signal configuration information in the second reference signal configuration information set is included in the first reference signal configuration information set. In other words, a problem that the reference signal configuration information requested by the terminal device cannot be satisfied because the reference signal configuration information determined by the terminal device is improper (for example, a current network cannot provide the reference signal configuration information) is avoided, so that a success rate of requesting reference signal configuration information by the terminal device is increased, thereby meeting a positioning requirement of the terminal device.

Optionally, the method further includes:
sending third information to the terminal device, where the third information indicates the terminal device to send the second information to the first network device when a preset condition is met.

It can be learned that, in the foregoing technical solution, the first network device sends the third information to the terminal device, so that the terminal device can send the second information to the first network device when the preset condition is met. This avoids a problem that power consumption of the terminal device increases and network efficiency decreases because the terminal device frequently requests the reference signal configuration information.

Optionally, the third information includes one or more of the following: a preset first reference signal strength, a preset second reference signal strength, a preset third reference signal strength, a preset first measurement result error, a preset second measurement result error, a preset third measurement result error, a preset first positioning precision, a preset second positioning precision, a preset third positioning precision, a preset first positioning precision error, a preset second positioning precision error, and a preset third positioning precision error.

Optionally, the preset condition includes one or more of the following:
a reference signal strength measured by the terminal device is less than or equal to the preset first reference signal strength;
a measurement result error of the terminal device is greater than or equal to the preset first measurement result error;
a positioning precision measured by the terminal device is less than or equal to the preset first positioning precision; and
a positioning precision error measured by the terminal device is greater than or equal to the preset first positioning precision error.

Optionally, the preset condition includes one or more of the following:
a reference signal strength measured by the terminal device is less than or equal to the preset second reference signal strength, and the reference signal strength measured by the terminal device is greater than or equal to the preset third reference signal strength;
a measurement result error of the terminal device is less than or equal to the preset second measurement result error, and the measurement result error of the terminal device is greater than or equal to the preset third measurement result error;
a positioning precision measured by the terminal device is less than or equal to the preset second positioning precision, and the positioning precision measured by the terminal device is greater than or equal to the preset third positioning precision; and
a positioning precision error measured by the terminal device is less than or equal to the preset second positioning precision error, and the positioning precision error measured by the terminal device is greater than or equal to the preset third positioning precision error.

Optionally, the receiving second information sent by the terminal device includes:
receiving the second information sent by the terminal device, where the second information is determined based on fourth information, the fourth information includes a reference signal configuration information set of the second network device and/or a third reference signal configuration information set, the reference signal configuration information set of the second network device includes one or more pieces of reference signal configuration information sent by the second network device, and the third reference signal configuration information set includes the one or more pieces of reference signal configuration information requested by the terminal device on-demand; and the fourth information is sent by the second network device.

It can be learned that, in the foregoing technical solution, the terminal device obtains the fourth information, so that the terminal device may send the second information to the first network device based on the latest reference signal configuration information set that is being used by a network in a current phase, and/or information about whether the reference signal configuration information has been requested and successfully configured by another terminal device, and/or information such as reference signal configuration information set that can be requested by the terminal equipment, so that a success rate of requesting the reference signal configuration information by the terminal device is increased, thereby meeting meet a positioning requirement of the terminal device. In addition, this avoids a problem that power consumption of the terminal device increases and network efficiency decreases because the terminal device frequently requests the reference signal configuration information.

Optionally, a trigger condition for sending the fourth information is that the reference signal configuration information set of the second network device changes.

It can be learned that, in the foregoing technical solution, if the reference signal configuration information set of the second network device changes, the second network device sends the fourth information, so that the terminal device may send the second information to the first network device based on the latest reference signal configuration information set that is being used by a network in a current phase, and/or information about whether the reference signal configuration information has been requested and successfully configured by another terminal device, and/or information such as reference signal configuration information set that can be requested by the terminal equipment, so that a success rate of requesting the reference signal configuration information by the terminal device is increased, thereby meeting a positioning requirement of the terminal device. In addition, this avoids a problem that power consumption of the terminal device increases and network efficiency decreases because the terminal device frequently requests the reference signal configuration information.

Optionally, all or partial reference signal configuration information in the third reference signal configuration information set is included in the first reference signal configuration information set.

Optionally, the first information includes first assistance information, and the first assistance information includes one or more of the following information: one or more pieces of frequency layer information, one or more pieces of sending-receiving node information, one or more pieces of reference signal resource set information, and one or more pieces of reference signal resource information.

It can be learned that, in the foregoing technical solution, because the first information includes the first assistance information, the first assistance information includes configuration information at different granularities (for example, one or more of the following: frequency layer information, sending-receiving node information, reference signal resource set information, and reference signal resource information), so that the terminal device can flexibly refer to configuration information at different granularities.

Optionally, the first information includes second assistance information, the second assistance information is predefined assistance information, and the second assistance information includes one or more of the following information: one or more pieces of frequency layer information, one or more pieces of sending-receiving node information, one or more pieces of reference signal resource set information, and one or more pieces of reference signal resource information.

It can be learned that, in the foregoing technical solution, because the first information includes the second assistance information, the second assistance information is predefined assistance information. That is, the second assistance information may be carried in a new protocol, so that backward compatibility can be improved. In addition, the second assistance information includes configuration information at different granularities (for example, one or more of the following: frequency layer information, sending-receiving node information, reference signal resource set information, and reference signal resource information), so that the terminal device can flexibly refer to configuration information at different granularities.

Optionally, the frequency layer information includes one or more of the following information: frequency layer identification information, subcarrier spacing information, bandwidth information, a start physical resource block location, frequency information, spacing information, cyclic prefix information, and the sending-receiving node information.

Optionally, the sending-receiving node information includes one or more of the following information: reference signal identification information, cell identification information, frequency information, reference signal sending start time information, reference signal time difference RSTD information, reference signal time difference uncertainty RSTD-uncertainty information, and the reference signal resource set information.

Optionally, the reference signal resource set information includes one or more of the following information: reference signal resource set identification information, periodicity information, interval information, density information, a symbol quantity, information indicating that simultaneous sending is not supported, information indicating that simultaneous receiving is not supported, power information, and the reference signal resource information; the information indicating that simultaneous sending is not supported means that during sending of the reference signal by the terminal, sending of other information or a reference signal other than the reference signal is not supported; and the information indicating that simultaneous receiving is not supported means that during receiving of the reference signal, receiving of other information or a reference signal other than the reference signal is not supported.

Optionally, the reference signal resource information includes one or more of the following information: a reference signal resource identifier, reference signal sequence identification information, interval information, and reference signal resource sending/receiving start time information.

Optionally, the first assistance information is included in signaling NR-DL-PRS-AssistanceData-r16.

It can be learned that, in the foregoing technical solution, the first assistance information is included in the signaling NR-DL-PRS-AssistanceData-r16, that is, the first assistance information may be included in an existing protocol. Therefore, an impact on the existing protocol is small.

Optionally, the second information further includes one or more of the following: a priority of a frequency layer, a priority of a sending-receiving node, a priority of a reference signal resource set, and a priority of a reference signal resource.

It can be learned that, in the foregoing technical solution, the second information may include priority information at different granularities (for example, one or more of the following: the priority of the frequency layer, the priority of the sending-receiving node, the priority of the reference signal resource set, and the priority of the reference signal resource), so that the second network device can learn of priority information at different granularities, thereby providing help for a network to configure a reference signal.

Optionally, the second information further includes one or more of the following: an identifier of a secondary cell, an identifier of an activated bandwidth part BWP resource of the secondary cell, configuration information of the activated BWP resource of the secondary cell, an identifier of a deactivated BWP resource of the secondary cell, and configuration information of the deactivated BWP resource of the secondary cell.

It can be learned that, in the foregoing technical solution, the second information may include an identifier of a secondary cell, an identifier of an activated BWP resource of the secondary cell, and the like, so that the second network device can learn of the identifier of the secondary cell, the identifier of the activated BWP resource of the secondary cell, and the like, thereby providing help for a network to configure a reference signal.

According to a third aspect, a communication apparatus is provided, where the communication apparatus includes a transceiver module, where the transceiver module is configured to:
obtain first information, where the first information includes a first reference signal configuration information set, the first reference signal configuration information set includes one or more pieces of reference signal configuration information, and the one or more pieces of reference signal configuration information are reference signal configuration information requested by a terminal device on-demand; and
send second information to a first network device, where the second information includes a second reference signal configuration information set requested by the terminal device, and the second reference signal configuration information set includes one or more pieces of reference signal configuration information.

Optionally, all or partial reference signal configuration information in the second reference signal configuration information set is included in the first reference signal configuration information set.

Optionally, the transceiver module is further configured to receive third information sent by the first network device, where the third information indicates the terminal device to send the second information to the first network device when a preset condition is met.

Optionally, the third information includes one or more of the following: a preset first reference signal strength, a preset second reference signal strength, a preset third reference signal strength, a preset first measurement result error, a preset second measurement result error, a preset third measurement result error, a preset first positioning precision, a preset second positioning precision, a preset third positioning precision, a preset first positioning precision error, a preset second positioning precision error, and a preset third positioning precision error.

Optionally, the preset condition includes one or more of the following:
a reference signal strength measured by the terminal device is less than or equal to the preset first reference signal strength;
a measurement result error of the terminal device is greater than or equal to the preset first measurement result error;
a positioning precision measured by the terminal device is less than or equal to the preset first positioning precision; and
a positioning precision error measured by the terminal device is greater than or equal to the preset first positioning precision error.

Optionally, the preset condition includes one or more of the following:
a reference signal strength measured by the terminal device is less than or equal to the preset second reference signal strength, and the reference signal strength measured by the terminal device is greater than or equal to the preset third reference signal strength;
a measurement result error of the terminal device is less than or equal to the preset second measurement result error, and the measurement result error of the terminal device is greater than or equal to the preset third measurement result error;
a positioning precision measured by the terminal device is less than or equal to the preset second positioning precision, and the positioning precision measured by the terminal device is greater than or equal to the preset third positioning precision; and
a positioning precision error measured by the terminal device is less than or equal to the preset second positioning precision error, and the positioning precision error measured by the terminal device is greater than or equal to the preset third positioning precision error.

Optionally, the transceiver module is further configured to receive fourth information sent by a second network device, where the fourth information includes a reference signal configuration information set of the second network device and/or a third reference signal configuration information set, the reference signal configuration information set of the second network device includes one or more pieces of reference signal configuration information sent by the second network device, and the third reference signal configuration information set includes the one or more pieces of reference signal configuration information requested by the terminal device on-demand; and
during sending of the second information to the first network device, the transceiver module is configured to send the second information to the first network device based on the fourth information.

Optionally, all or partial reference signal configuration information in the third reference signal configuration information set is included in the first reference signal configuration information set.

Optionally, the first information includes first assistance information, and the first assistance information includes one or more of the following information: one or more pieces of frequency layer information, one or more pieces of sending-receiving node information, one or more pieces of reference signal resource set information, and one or more pieces of reference signal resource information.

Optionally, the first information includes second assistance information, the second assistance information is predefined assistance information, and the second assistance information includes one or more of the following information: one or more pieces of frequency layer information, one or more pieces of sending-receiving node information, one or more pieces of reference signal resource set information, and one or more pieces of reference signal resource information.

Optionally, the frequency layer information includes one or more of the following information: frequency layer identification information, subcarrier spacing information, bandwidth information, a start physical resource block location, frequency information, spacing information, cyclic prefix information, and the sending-receiving node information.

Optionally, the sending-receiving node information includes one or more of the following information: reference signal identification information, cell identification information, frequency information, reference signal sending start time information, reference signal time difference RSTD information, reference signal time difference uncertainty RSTD-uncertainty information, and the reference signal resource set information.

Optionally, the reference signal resource set information includes one or more of the following information: reference signal resource set identification information, periodicity information, interval information, density information, a symbol quantity, information indicating that simultaneous sending is not supported, information indicating that simultaneous receiving is not supported, power information, and the reference signal resource information; the information indicating that simultaneous sending is not supported means that during sending of the reference signal by the terminal, sending of other information or a reference signal other than the reference signal is not supported; and the information indicating that simultaneous receiving is not supported means that during receiving of the reference signal, receiving of other information or a reference signal other than the reference signal is not supported.

Optionally, the reference signal resource information includes one or more of the following information: a reference signal resource identifier, reference signal sequence identification information, interval information, and reference signal resource sending/receiving start time information.

Optionally, the first assistance information is included in signaling NR-DL-PRS-AssistanceData-r16.

Optionally, the second information further includes one or more of the following: a priority of a frequency layer, a priority of a sending-receiving node, a priority of a reference signal resource set, and a priority of a reference signal resource.

Optionally, the second information further includes one or more of the following: an identifier of a secondary cell, an identifier of an activated bandwidth part BWP resource of the secondary cell, configuration information of the activated BWP resource of the secondary cell, an identifier of a deactivated BWP resource of the secondary cell, and configuration information of the deactivated BWP resource of the secondary cell.

According to a fourth aspect, a communication apparatus is provided, where the communication apparatus includes a transceiver module, where the transceiver module is configured to:
send first information to a terminal device, where the first information includes a first reference signal configuration information set, the first reference signal configuration information set includes one or more pieces of reference signal configuration information, and the one or more pieces of reference signal configuration information are reference signal configuration information requested by the terminal device on-demand; and
receive second information sent by the terminal device, where the second information includes a second reference signal configuration information set requested by the terminal device, and the second reference signal configuration information set includes one or more pieces of
reference signal configuration information.

Optionally, all or partial reference signal configuration information in the second reference signal configuration information set is included in the first reference signal configuration information set.

Optionally, the transceiver module is further configured to send third information to the terminal device, where the third information indicates the terminal device to send the second information to the first network device when a preset condition is met.

Optionally, during receiving of the second information sent by the terminal device, the transceiver module is configured to:
receive the second information sent by the terminal device, where the second information is determined based on fourth information, the fourth information includes a reference signal configuration information set of the second network device and/or a third reference signal configuration information set, the reference signal configuration information set of the second network device includes one or more pieces of reference signal configuration information sent by the second network device, and the third reference signal configuration information set includes the one or more pieces of reference signal configuration information requested by the terminal device on-demand; and the fourth information is sent by the second network device.

Optionally, a trigger condition for sending the fourth information is that the reference signal configuration information set of the second network device changes.

Optionally, all or partial reference signal configuration information in the third reference signal configuration information set is included in the first reference signal configuration information set.

Optionally, the first information includes first assistance information, and the first assistance information includes one or more of the following information: one or more pieces of frequency layer information, one or more pieces of sending-receiving node information, one or more pieces of reference signal resource set information, and one or more pieces of reference signal resource information.

Optionally, the first information includes second assistance information, the second assistance information is predefined assistance information, and the second assistance information includes one or more of the following information: one or more pieces of frequency layer information, one or more pieces of sending-receiving node information, one or more pieces of reference signal resource set information, and one or more pieces of reference signal resource information.

Optionally, the frequency layer information includes one or more of the following information: frequency layer identification information, subcarrier spacing information, bandwidth information, a start physical resource block location, frequency information, spacing information, cyclic prefix information, and the sending-receiving node information.

Optionally, the sending-receiving node information includes one or more of the following information: reference signal identification information, cell identification information, frequency information, reference signal sending start time information, reference signal time difference RSTD information, reference signal time difference uncertainty RSTD-uncertainty information, and the reference signal resource set information.

Optionally, the reference signal resource set information includes one or more of the following information: reference signal resource set identification information, periodicity information, interval information, density information, a symbol quantity, information indicating that simultaneous sending is not supported, information indicating that simultaneous receiving is not supported, power information, and the reference signal resource information; the information indicating that simultaneous sending is not supported means that during sending of the reference signal by the terminal, sending of other information or a reference signal other than the reference signal is not supported; and the information indicating that simultaneous receiving is not supported means that during receiving of the reference signal, receiving of other information or a reference signal other than the reference signal is not supported.

Optionally, the reference signal resource information includes one or more of the following information: a reference signal resource identifier, reference signal sequence identification information, interval information, and reference signal resource sending/receiving start time information.

Optionally, the first assistance information is included in signaling NR-DL-PRS-AssistanceData-r16.

Optionally, the second information further includes one or more of the following: a priority of a frequency layer, a priority of a sending-receiving node, a priority of a reference signal resource set, and a priority of a reference signal resource.

Optionally, the second information further includes one or more of the following: an identifier of a secondary cell, an identifier of an activated bandwidth part BWP resource of the secondary cell, configuration information of the activated BWP resource of the secondary cell, an identifier of a deactivated BWP resource of the secondary cell, and configuration information of the deactivated BWP resource of the secondary cell.

According to a fifth aspect, a communication apparatus is provided, including a memory and a processor, where the memory is configured to store a computer-executable instruction, the processor is configured to execute the computer-executable instruction stored in the memory, and execution of the computer-executable instruction stored in the memory causes the processor to perform the method according to any one of the first aspect, or the method according to any one of the second aspect.

According to a sixth aspect, a communication apparatus is provided, where the communication apparatus includes a processor and a communication interface, the communication interface is configured to input and/or output information, and the processor is configured to execute a computer program, so that the apparatus performs the method according to any one of the first aspect or the second aspect.

According to a seventh aspect, a computer-readable storage medium is provided, storing a computer program thereon, where the computer program, when executed by a computer, causes the computer to implement the method according to any one of the first aspect or the method according to any one of the second aspect.

According to an eighth aspect, a computer program product is provided, where the computer program product stores a computer program, and the computer program, when executed by a computer, causes the computer to perform the method according to any one of the first aspect or the method according to any one of the second aspect.

According to a ninth aspect, a communication system is provided, including the foregoing terminal device and the foregoing first network device.

### BRIEF DESCRIPTION OF DRAWINGS

To describe the technical solutions in embodiments of this application or in the prior art more clearly, the following briefly describes the accompanying drawings used in describing embodiments or the prior art. It is clear that the accompanying drawings in the following description show some embodiments of this application, and a person of ordinary skill in the art may still derive other drawings from these accompanying drawings without creative efforts.

In the drawings:
FIG. 1 is an infrastructure of a communication system according to an embodiment of this application;
FIG. 2 is a schematic diagram of a specific possible network architecture applicable to an embodiment of this application;
FIG. 3 is a schematic structural diagram of hardware applicable to a communication apparatus according to an embodiment of this application;
FIG. 4 is a schematic flowchart of a communication method based on a reference signal according to an embodiment of this application;
FIG. 5 is a schematic flowchart of still another communication method based on a reference signal according to an embodiment of this application;
FIG. 6 is a schematic flowchart of still another communication method based on a reference signal according to an embodiment of this application;
FIG. 7 is a schematic flowchart of still another communication method based on a reference signal according to an embodiment of this application;
FIG. 8A, FIG. 8B, and FIG. 8C are a schematic flowchart of still another communication method based on a reference signal according to an embodiment of this application;
FIG. 9 is a schematic structural diagram of a communication apparatus according to an embodiment of this application;
FIG. 10 is a schematic structural diagram of a simplified terminal device according to an embodiment of this application; and
FIG. 11 is a schematic structural diagram of a simplified access network device according to an embodiment of this application.

### DESCRIPTION OF EMBODIMENTS

The following describes technical solutions in embodiments of this application with reference to accompanying drawings in embodiments of this application.

It should be understood that the terms "system" and "network" in embodiments of this application may be used interchangeably. "At least one" refers to one or more, and "multiple" refers to two or more. "And/or" is an association relationship for describing associated objects and represents that three relationships may exist. For example, A and/or B may represent the following three cases: Only A exists, both A and B exist, and only B exists, where A and B may be singular or plural. The character "/" generally indicates that the associated objects are in an "OR" relationship. At least one of the following items (pieces) or a similar expression thereof refers to any combination of these items, including any combination of singular items (pieces) or plural items (pieces). For example, at least one of a, b, or c may represent: a, b, c, a-b, a-c, b-c, or a-b-c, where a, b, and c may be one or more. The singular expressions "a", "one", "the", "the above", "the" and "this" are intended to also include expressions such as "one or more", unless the context expressly indicates to the contrary. In addition, unless otherwise specified, ordinal numbers such as "first" and "second" mentioned in embodiments of this application are used to distinguish a plurality of objects, and are not used to limit a sequence, a time sequence, a priority, or an importance degree of the plurality of objects.

Reference to "one embodiment", "some embodiments", or the like described in this application indicates that one or more embodiments of this application include a specific feature, structure, or characteristic described with reference to embodiments. Therefore, statements "in one embodiment", "in some embodiments", "in some other embodiments", "in some additional embodiments", and the like that differ in this specification do not necessarily refer to the same embodiment, but rather means "one or more but not all embodiments", unless otherwise specified. The terms "comprise", "include", "have", and variations thereof all mean "including, but not limited to", unless otherwise specified.

The following describes some nouns (or communication terms) related to this application.

### 1. Frequency layer (positioning frequency layer)

A frequency layer refers to a collection of a positioning reference signal (positioning reference signal, PRS) resource set across one or more sending nodes (transmit points, TP), or receiving nodes (reception points, RP), or sending-receiving nodes (transmit and reception points, TRP) with the following features:
1) A same sub-carrier space (sub-carrier spacing, SCS) and cyclic prefix (cyclic prefix, CP) types;
2) A same center frequency;
3) A same frequency Point A;
4) A same PRS bandwidth and a start physical resource block (physical resource block, PRB).

### 2. Sending node (transmit point, TP), receiving node (reception point, RP), and sending-receiving node (transmission-reception point, TRP)

A sending node (transmit point, TP) may also be described as a transmission node, and refers to a group of transmit antennas with the same geographical location of a cell, a part of a cell, or a DL-PRS-only TP (only PRS signals are sent and not associated with any cell), for example, an antenna array (with one or more antenna units). The sending node may include a base station (ng-eNB or gNB) antenna, a remote radio head (remote radio head, RRH), a remote antenna of a base station, an antenna of a DL-PRS-only TP, and the like. A cell may be formed by one or more sending nodes. For an isomorphic deployment scenario, each sending node may be corresponding to one cell.

A receiving node (reception point, RP) is a group of receiving antennas of a cell, a part of a cell, or a UL-SRS-only TP (which sends only SRS signals and are unassociated with any cell) at a same geographical location, for example, an antenna array (with one or more antenna units). The receiving node may include a base station (ng-eNB or gNB) antenna, a remote radio head (remote radio head, RRH), a remote antenna of a base station, an antenna of a UL-SRS-only TP, and the like. A cell may be formed by one or more receiving nodes. For an isomorphic deployment scenario, each receiving node may be corresponding to one cell.

A sending-receiving node (transmission-reception point, TRP) refers to a group of antennas that have the same geographical location and support a function of a sending node and/or a receiving node. For related definition and description, refer to 3GPP TS 38.305-g30.

It may be understood that in the fifth generation mobile communication technology (5th generation mobile communication technology, 5G), a central unit (central unit, CU) and one or more distributed units (distributed unit, DU) are integrated into the gNB. One DU is corresponding to one cell, and one cell includes one or more TRPs.

### 3. Positioning measurement request

In embodiments of this application, the positioning measurement request is a message used to request a positioning task for a specific terminal device. The positioning task may be an immediate request (location immediate request, LIR) service or a location deferred request (location deferred request, LDR) service. By executing the positioning task, a mobile communication network may notify the location information of the terminal device or the location-related positioning event to a requester of the positioning task, that is, the positioning requester. A positioning management device or a location management function (location management function, LMF) network element may be configured to manage a positioning request for the specific terminal device. Specifically, managing a positioning measurement request means that the positioning management device or the LMF network element may be configured to feed back, based on a positioning measurement request sent by the positioning requester, location information or measurement result information of the terminal device to the positioning requester, or indicate, to the positioning requester, that a positioning event indicated by the positioning request appears on the terminal device.

The instant request service is an "instant request, instant response" positioning service, and the positioning measurement request of the instant request service may include a LIR. In this implementation of this application, the positioning requester sends the LIR to a core network element in which the terminal device is located, for example, an access and mobility management function (access and mobility management function, AMF) network element or a gateway mobile location center (gateway mobile location center, GMLC) network element. The AMF network element or the GMLC forwards the LIR to the positioning management device or another network element such as an LMF network element in the core network, so that the positioning management device or the LMF network element feeds back the location information of the terminal device to the positioning requester instantly based on the LIR.

The location deferred request service has a delay property. The positioning requester is equivalent to subscribing to a positioning report of the terminal device from the terminal device, a core network element in which the terminal device is located, or another related network element. The report may be triggered after a specific positioning event is met. For example, the positioning event includes: the terminal device moves out of or moves to an area, a moving distance of the terminal device reaches a threshold distance, or a preset reporting periodicity is met. The report may carry location information of the terminal device, and/or the report may indicate that the foregoing location event is met, for example, to instruct the terminal device to move out of or to move to an area.

### 4. Positioning reference signal (PRS)

The positioning reference signal includes a downlink positioning reference signal (downlink positioning reference signal, DL-PRS) and an uplink positioning reference signal (uplink positioning reference signal, UL-PRS). The downlink positioning reference signal DL-PRS is usually referred to as a positioning reference signal PRS for short. The uplink positioning reference signal UL-PRS includes a sounding reference signal (sounding reference signal, SRS, used in 3GPP R15 and earlier versions) for MIMO, and a positioning sounding reference signal (positioning sounding reference signal, pos-SRS or SRS).

### 5. On-demand (On-demand) request

On-demand (On-demand) describes an operation or a behavior that is initiated by the terminal device to a network device such as the positioning management device or the base station and that requests a PRS and/or SRS related configuration, or describes an operation or a behavior that is initiated by a network device such as the positioning management device or the base station and that requests a PRS and/or SRS related configuration, or describes an operation or a behavior initiated by a network device such as the base station to request a PRS and/or SRS related configuration. Specifically, the network device such as the terminal device, the positioning management device, or the base station may request/suggest/recommend a specific PRS and/or SRS related configuration, for example, a PRS pattern (PRS pattern), on/off, a periodicity, or a bandwidth.

The foregoing content briefly describes meanings of some nouns (or communication terms) in embodiments of this application. To better understand a communication method based on a reference signal provided in embodiments of this application, the following describes a system architecture and/or an application scenario of the communication method based on the reference signal provided in embodiments of this application. It may be understood that the scenario described in embodiments of this application is intended to describe the technical solutions in embodiments of this application more clearly, and does not constitute a limitation on the technical solutions provided in embodiments of this application.

It should be understood that the technical solutions in embodiments of this application may be applied to a fifth generation mobile communication technology (5th generation mobile communication technology, 5G) or the like. The technical solutions in embodiments of this application may be further applied to another future communication system, for example, a 6G communication system. In the future communication system, functions may remain the same, but names may change.

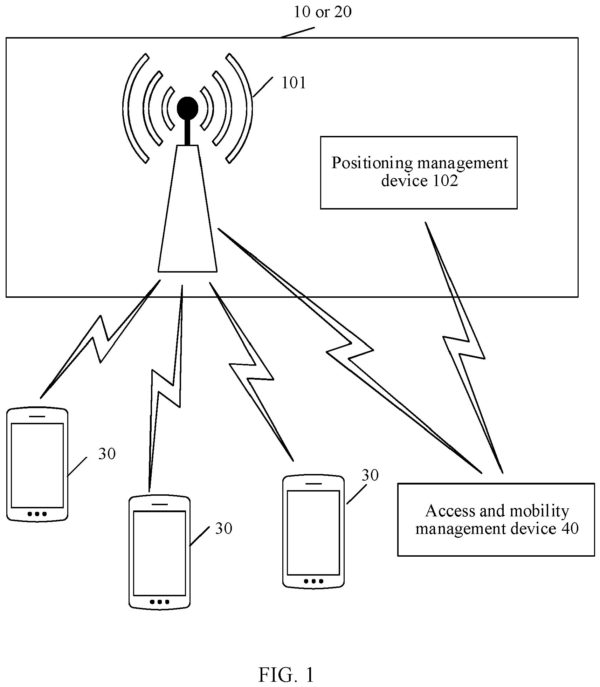

The following describes a basic architecture of a communication system provided in embodiments of this application. Refer to FIG. 1. FIG. 1 is a basic architecture of a communication system according to an embodiment of this application. As shown in FIG. 1, the communication system may include a first network device 10, a second network device 20, and one or more terminal devices 30 communicating with the first network device 10 or the second network device 20. FIG. 1 is merely a schematic diagram, and does not constitute a limitation on an applicable scenario of technical solutions provided in this application.

The first network device 10 may be an access network device 101 or a positioning management device 102, and the second network device 20 may be an access network device 101 or the positioning management device 102.

The access network device 101 is an entity that is on a network side and that is configured to send a signal, receive a signal, or send a signal and receive a signal. The access network device 101 may be an apparatus deployed in a radio access network (radio access network, RAN) to provide a wireless communication function for the terminal device 30, for example, may be a sending-receiving node (transmission reception point, TRP), a base station, or a controller node in various forms. For example, the access network device is a network controller, a radio controller, or a radio controller in a cloud radio access network (cloud radio access network, CRAN) scenario. Specifically, the access network device 101 may be a macro base station, a micro base station (also referred to as a small cell), a relay station, an access point (access point, AP), a radio network controller (radio network controller, RNC), a NodeB (NodeB, NB), a base station controller (base station controller, BSC), a base transceiver station (base transceiver station, BTS), a home base station (for example, home evolved NodeB, or home NodeB, HNB), a baseband unit (baseband unit, BBU), a sending node (transmit point, TP), a receiving node (reception point, RP), a mobile switching center, or the like, or may also be an antenna panel of a base station. The controller node may be connected to a plurality of base stations, and configure resources for a plurality of terminals covered by the plurality of base stations. In systems that use different radio access technologies, names of devices having functions of the base station may vary. For example, the access network device may be a gNB in 5G, a network side device in a network later than 5G, an access network device in a future evolved PLMN network, or the like. A specific name of the access network device 101 is not limited in this application. In addition, the access network device 101 may further include a central unit (central unit, CU) and a distributed unit (distributed unit, DU) that are integrated in the gNB.

The positioning management device 102 is configured to select a corresponding positioning method based on a positioning precision requirement, a delay requirement, and the like, select a corresponding communication protocol to exchange information required for positioning, and provide other required information or a positioning policy for a positioning service. In 4G communication, the positioning management device 102 may be an evolved serving mobile location center (evolved serving mobile location center, E-SMLC). In 5G communication, the positioning management device 102 may be a location management function (location management function, LMF) network element. In future communication such as 6th generation (6th generation, 6G) communication, the positioning management device 102 may still be an LMF network element or have another name. This is not limited in this application.

The terminal device 30 is an entity that is on a user side and that is configured to receive a signal, send a signal, or receive a signal and send a signal. The terminal device 30 is configured to provide one or more of a voice service and a data connectivity service for a user. The terminal device 30 may be a device that has a wireless transceiver function and can cooperate with the access network device to provide a communication service for a user. Specifically, the terminal device 30 may be user equipment (user equipment, UE), an access terminal, a subscriber unit, a subscriber station, a mobile station, a mobile console, a remote station, a remote terminal, a mobile device, a terminal, a wireless communication device, a user agent, or a user apparatus. The terminal device 30 may also be an unmanned aerial vehicle, an internet of Things (internet of things, IoT) device, a station (station, ST) in a WLAN, a cellular phone (cellular phone), a smartphone (smartphone), a cordless phone, a wireless data card, a tablet computer, a session initiation protocol (session initiation protocol, SIP) phone, a wireless local loop (wireless local loop, WLL) station, personal digital assistant (personal digital assistant, PDA) device, a laptop computer (laptop computer), a machine type communication (machine type communication, MTC) terminal, a handheld device with a wireless communication function, a computing device or another processing device connected to a wireless modem, a vehicle device, a wearable device (which may also be referred to as a wearable intelligent device), a virtual reality (virtual reality, VR) terminal, an augmented reality (augmented reality, AR) terminal, a wireless terminal in industrial control (industrial control), a wireless terminal in self-driving (self-driving), a wireless terminal in remote medical (remote medical), a wireless terminal in smart grid (smart grid), a wireless terminal in a transportation safety (transportation safety), a wireless terminal in a smart city (smart city), a wireless terminal in a smart home (smart home), and the like. Alternatively, the terminal device 30 may be a device to device (device to device, D2D) device, for example, an electricity meter or a water meter. Alternatively, the terminal device 30 may be a terminal in a 5G system, or may be a terminal in a next generation communication system. This is not limited in this embodiment of this application.

With reference to FIG. 1, the communication system may further include an access and mobility management device 40. The access and mobility management device 40 may communicate with the network device 101, and the access and mobility management device 40 may communicate with the positioning management device 102.

The access and mobility management device 40 is mainly used for registration, mobility management, and tracking area update procedures of a terminal device in a mobile network. The access and mobility management device 40 terminates a non-access stratum (non-access stratum, NAS) message, completes registration management, connection management and reachability management, allocates a track area list (track area list, TA list), mobility management, and the like. In addition, a session management (session management, SM) message is transparently routed to a session management network element. In 5G communication, the access and mobility management device 40 may be an access and mobility management function (access and mobility management function, AMF) network element, and an Namf is a service-oriented interface provided by the AMF network element. The AMF network element may communicate with another network function through the Namf. In future communication such as 6th generation (6th generation, 6G) communication, the access and mobility management device 40 may still be an AMF network element or have another name. This is not limited in this application.

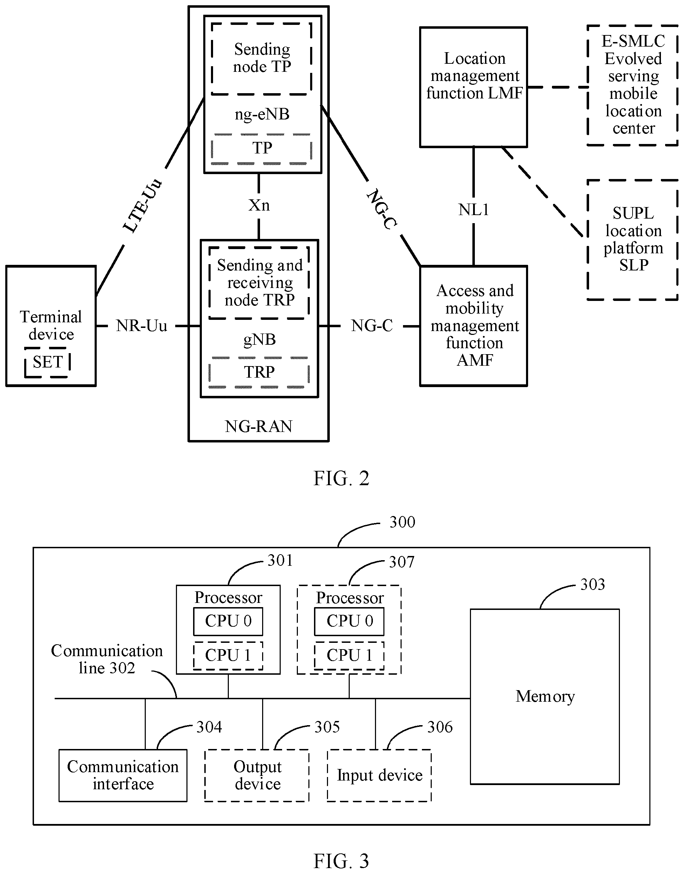

The following uses a 5G communication system as an example to describe a schematic diagram of a specific possible network architecture applicable to an embodiment of this application with reference to FIG. 2. Specifically, FIG. 2 is a schematic diagram of a specific possible network architecture applicable to an embodiment of this application. The network structure may include the LMF network element, the AMF network element, the gNB (or ng-eNB), the terminal device, and the like.

The gNB may include a plurality of TPs. It should be noted that the gNB may further include a plurality of RPs. It may be understood that, in another description manner, it may also be understood that the gNB may include a plurality of TRPs. In addition, an NL1 interface is a reference point between the AMF network element and the LMF network element, and an NG-C interface is a reference point between the gNB (or ng-eNB) and the AMF network element, and is used for sending of a non-access stratum (non-access stratum, NAS) message, a next generation application protocol (next generation application protocol, NGAP) message, and the like. The gNB communicates with the terminal device through an air interface. The air interface is a name, and the air interface may be a communication interface between a network device and a terminal device. For example, in 4G, an air interface is referred to as a Uu interface (that is, an LTE Uu interface in FIG. 2). In 5G, an air interface is referred to as a new radio (new radio, NR) interface (namely, an NR Uu interface in FIG. 2).

In addition, the AMF network element may also perform interaction through a service-oriented interface. For example, a service-oriented interface provided by the AMF network element for external systems may be an Namf. For related descriptions, refer to a diagram of a 5G system architecture (5G system architecture) in the 3GPP TS 23501 standard. Details are not described herein again.

It should be noted that, in FIG. 2, a control plane and a user plane of the LMF network element are an evolved-serving mobile location center (evolved-serving mobile location center, E-SMLC) and a SUPL location platform (SUPL location platform, SLP) respectively. In this way, the following information can be exchanged with the gNB/ng-eNB and the terminal device: information is exchange with the ng-eNB/gNB by using an NR positioning protocol annex (NR positioning protocol annex, NRPPa) message, for example, obtaining configuration information about a PRS and a sounding reference signal (sounding reference signal, SRS), cell timing, cell location information, and the like; capability information, assistance information, measurement information, and the like of the terminal device are transferred between the terminal devices by using an LTE positioning protocol (LTE positioning protocol, LPP) message. The AMF network element may send a location service request related to the terminal device from a 5G core network location service (location services, LCS) entity, or the AMF network element may start some location services on behalf of a specific terminal device, and forward the location service request to the LMF network element. After the location information returned by the terminal device is obtained, the related location information is returned to the LCS entity of a 5G core network. The terminal device may measure downlink signals from the gNB and other sources to support positioning. The gNB/ng-eNB may provide measurement information for the terminal device, and convey the information to the LMF network element.

It may be understood that the foregoing network element or function may be a network element in a hardware device, or may be a software function running on dedicated hardware, or may be a virtualization function instantiated on a platform (for example, a cloud platform). The foregoing network element or function may be divided into one or more services. Further, a service independent of the network function may exist. In this application, an instance of the foregoing function, an instance of a service included in the foregoing function, or a service instance independent of the network function may all be referred to as a service instance.

In addition, the technical solutions provided in embodiments of this application may be applicable to a plurality of system architectures. The network architecture and the service scenario described in embodiments of this application are intended to describe the technical solutions in embodiments of this application more clearly, but do not constitute a limitation on the technical solutions provided in embodiments of this application. A person of ordinary skill in the art may learn that the technical solutions provided in embodiments of this application are also applicable to a similar technical problem as the network architecture evolves and a new service scenario emerges.

Optionally, each network element in FIG. 1 (for example, the first network device 10, the second network device 20, the terminal device 30, the access and mobility management device 40) may be implemented by one device, or may be jointly implemented by a plurality of devices, or may be a function module in a device. This is not specifically limited in this embodiment of this application. It may be understood that the foregoing function may be a network element in a hardware device, or may be a software function running on dedicated hardware, or may be virtualization functions instantiated on a platform (for example, a cloud platform).

For example, each device in FIG. 1 may be implemented by using the communication apparatus 300 in FIG. 3. FIG. 3 is a schematic structural diagram of hardware applicable to a communication apparatus according to an embodiment of this application. The communication apparatus 300 includes at least one processor 301, a communication line 302, a memory 303, and at least one communication interface 304.

The processor 301 may be a general-purpose central processing unit (central processing unit, CPU), a microprocessor, an application-specific integrated circuit (application-specific integrated circuit, ASIC), or one or more integrated circuits configured to control program execution of solutions of this application.

The communication line 302 may include a path for transmitting information between the foregoing components.

The communication interface 304 is an apparatus (such as an antenna) of any transceiver type, and is configured to communicate with another device or a communication network, such as an Ethernet, a RAN, or a wireless local area network (wireless local area networks, WLAN).

The memory 303 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blueray optical disc, and the like), a magnetic disk storage medium or another magnetic storage device, or any other medium that can be used to carry or store expected program code in a form of an instruction or a data structure and that can be accessed by a computer. This is not limited thereto. The memory may exist independently and is connected to the processor through the communication line 302. Alternatively, the memory and the processor may be integrated. The memory provided in this embodiment of this application may generally be non-volatile. The memory 303 is configured to store a computer-executable instruction for executing the solutions of this application, and the processor 301 controls execution. The processor 301 is configured to execute the computer-executable instruction stored in the memory 303, to implement the method provided in the following embodiments of this application.

Optionally, the computer-executable instruction in embodiments of this application may also be referred to as an application program code. This is not specifically limited in embodiments of this application.

In a possible implementation, the processor 301 may include one or more CPUs, for example, a CPU 0 and a CPU 1 in FIG. 3.

In a possible implementation, the communication apparatus 300 may include a plurality of processors, for example, the processor 301 and the processor 307 in FIG. 3. Each of these processors may be a single-core (single-CPU) processor, or may be a multi-core (multi-CPU) processor. The processor herein may be one or more devices, circuits, and/or processing cores configured to process data (for example, a computer program instruction).

In a possible implementation, the communication apparatus 300 may further include an output device 305 and an input device 306. The output device 305 communicates with the processor 301, and may display information in a plurality of manners. For example, the output device 305 may be a liquid crystal display (liquid crystal display, LCD), a light emitting diode (light emitting diode, LED) display device, a cathode ray tube (cathode ray tube, CRT) display device, or a projector (projector). The input device 306 communicates with the processor 301, and may receive user input in a plurality of manners. For example, the input device 306 may be a mouse, a keyboard, a touchscreen device, or a sensor device.

The foregoing communication apparatus 300 may be a general-purpose device or a dedicated device. In a specific implementation, the communication apparatus 300 may be a desktop computer, a portable computer, a network server, a personal digital assistant (personal digital assistant, PDA), a mobile phone, a tablet computer, a wireless terminal device, an embedded device, or a device having a similar structure in FIG. 3. A type of the communication apparatus 300 is not limited in this embodiment of this application.

The following describes the technical solutions provided in embodiments of this application with reference to the accompanying drawings.

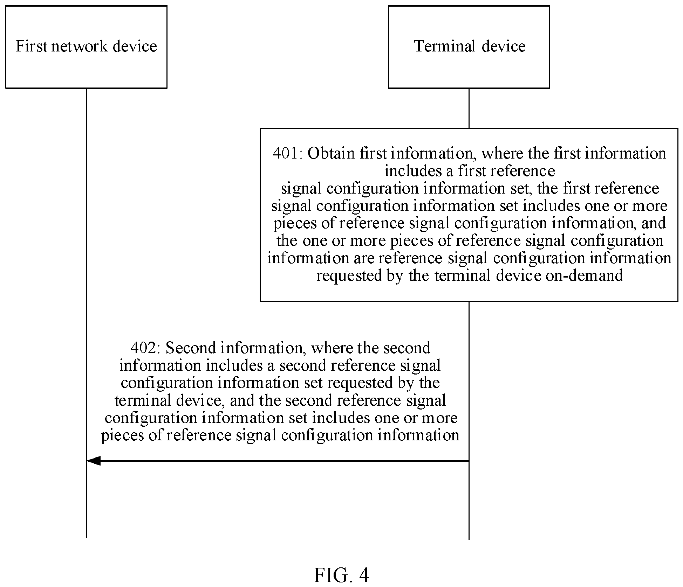

Refer to FIG. 4. FIG. 4 is a schematic flowchart of a communication method based on a reference signal according to an embodiment of this application. The terminal device in FIG. 4 may be the terminal device 30 in FIG. 1, and the first network device in FIG. 4 may be the first network device 10 in FIG. 1. As shown in FIG. 4, the method includes but is not limited to the following steps.

401: A terminal device obtains first information, where the first information includes a first reference signal configuration information set, the first reference signal configuration information set includes one or more pieces of reference signal configuration information, and the one or more pieces of reference signal configuration information are reference signal configuration information requested by a terminal device on-demand.

For on-demand request, refer to the foregoing related description. Details are not described herein again.

Optionally, step 401 may include the following steps. The terminal device receives first information sent by an access network device. Alternatively, the terminal device receives first information sent by a positioning management device. Alternatively, the terminal device obtains first information from an external interface (such as operation administration and maintenance (operation administration and maintenance, OAM)) or in another manner.

For example, the receiving, by the terminal device, first information sent by an access network device includes the following steps. The terminal device receives a first radio resource control (radio resource control, RRC) message or a first system information sent by the access network device, where the first RRC message or the first system information includes the first information.

In a possible implementation, the first system information may include a first positioning system information block (positioning system information block, posSIB), where the first posSIB may include the first information.

For example, the receiving, by the terminal device, the first information sent by a positioning management device includes the following steps. The terminal device receives a first LTE positioning protocol (LTE positioning protocol, LPP) message sent by the positioning management device, where the first LPP message includes the first information.

It should be noted that, in this application, in a possible implementation, the positioning management device may send a first request message to the access network device, where the first request message is used to request the first information. The positioning management device may receive a first response message sent by the access network device, where the first response message indicates the first information. The positioning management device may send the first information to the terminal device. The first request message and the first response message may be, for example, a new wireless positioning protocol annex (NR positioning protocol annex, NRPPa) message. This is not limited herein.

That the first reference signal configuration information set includes one or more pieces of reference signal configuration information requested by the terminal device on-demand may be understood as follows: the first reference signal configuration information set includes one or more pieces of reference signal configuration information that is allowed to be requested by the terminal device; the first reference signal configuration information set includes one or more pieces of reference signal configuration information that can be requested by the terminal device; the first reference signal configuration information set includes one or more pieces of reference signal configuration information that may be requested by the terminal device, or the first reference signal configuration information set includes one or more pieces of reference signal configuration information preset by the access network device. This is not limited herein. It may be understood that each of the one or more pieces of reference signal configuration information requested by the terminal device on-demand may include one or more of the following information: one or more pieces of frequency layer information, one or more pieces of sending-receiving node information, one or more pieces of reference signal resource set information, and one or more pieces of reference signal resource information.

In a possible implementation, the first information may include one or more of the following information: one or more pieces of frequency layer information, one or more pieces of sending-receiving node information, one or more pieces of reference signal resource set information, and one or more pieces of reference signal resource information.

In still another possible implementation, the first information may include first assistance information, and the first assistance information includes one or more of the following information: one or more pieces of frequency layer information, one or more pieces of sending-receiving node information, one or more pieces of reference signal resource set information, and one or more pieces of reference signal resource information.

In still another possible implementation, the first information may include second assistance information, the second assistance information is predefined assistance information, and the second assistance information includes one or more of the following information: one or more pieces of frequency layer information, one or more pieces of sending-receiving node information, one or more pieces of reference signal resource set information, and one or more pieces of reference signal resource information.

It should be noted that, in this application, predefined may be understood that predefined does not exist in an existing 3GPP standard.

For example, that the second assistance information is predefined assistance information may be understood that the second assistance information is newly defined assistance information.

For example, the first assistance information may be included in the first signaling, the second assistance information may be included in the second signaling, and the first signaling is different from the second signaling.

In a possible implementation, the first signaling may be provide assistance information signaling shared by different positioning methods. For example, the first signaling may be signaling CommonIEsRequestAssistanceData, signaling ProvideAssistanceData, or signaling NR-DL-PRS-AssistanceData, signaling with a similar definition or function, signaling with an extension field, or signaling with an extension field of any one of the foregoing signaling. This is not limited herein.

In still another possible implementation, the first signaling may be provide assistance information signaling of a specific positioning method. For example, the first signaling may be signaling NR-DL-TDOA-ProvideAssistanceData, signaling NR-DL-AoD-ProvideAssistanceData, signaling with a similar definition or function, signaling with an extension field, or signaling with an extension field of any one of the foregoing signaling. This is not limited herein.

In still another possible implementation, the first signaling may be request location information signaling shared by different positioning methods. For example, the first signaling may be signaling CommonIEsRequestLocationInformation, or signaling RequestLocationInformation, signaling with a similar definition or function, signaling with an extension field, or signaling with an extension field of any one of the foregoing signaling. This is not limited herein.

In still another possible implementation, the first signaling may be request location information signaling of a specific positioning method. For example, the first signaling may be signaling NR-DL-TDOA-RequestLocationInformation or signaling NR-DL-AoD-RequestLocationInformation, signaling with a similar definition or function, signaling with an extension field, or signaling with an extension field of any one of the foregoing signaling. This is not limited herein.

It may be understood that each of the one or more pieces of reference signal configuration information requested by the terminal device on-demand may include the first assistance information; each of the one or more pieces of reference signal configuration information requested by the terminal device on-demand may include the second assistance information; or each piece of one or more pieces of reference signal configuration information requested by the terminal device on-demand may include the first assistance information and the second assistance information. This is not limited herein.

Optionally, the frequency layer information may include one or more of the following information: frequency layer identification information (indicating the frequency layers on which the positioning reference signal can be sent), subcarrier spacing information, bandwidth information, a start physical resource block location, frequency information, spacing information, cyclic prefix information, and the sending-receiving node information.

The subcarrier spacing information (dl-PRS-SubcarrierSpacing) indicates the subcarrier spacing of the downlink PRS resource. For specific descriptions, refer to 3GPP TS 37.355. Details are not described herein.

The bandwidth information (dl-PRS-ResourceBandwidth) indicates a quantity of PRB physical resource blocks (physical resource blocks, PRBs) allocated for downlink PRS resources. For specific descriptions, refer to 3GPP TS 37.355. Details are not described herein.

The start physical resource block location (dl-PRS-StartPRB) is defined as a start PRB index of an offset relative to the reference downlink PRS frequency A at a positioning frequency layer. For specific descriptions, refer to 3GPP TS 37.355. Details are not described herein.

The frequency information (dl-PRS-PointA) indicates an absolute frequency of a DL-PRS reference resource block. For specific descriptions, refer to 3GPP TS 37.355. Details are not described herein.

The spacing information (dl-PRS-CombSizeN) indicates a resource element spacing in each symbol of the downlink PRS resource. For specific description, refer to 3GPP TS 37.355. Details are not described herein.

The cyclic prefix information (dl-PRS-CyclicPrefix) indicates a cyclic prefix length of a downlink PRS resource. For specific descriptions, refer to 3GPP TS 37.355. Details are not described herein.

Optionally, the sending-receiving node information may include one or more of the following information: reference signal identification information, cell identification information, frequency information, reference signal sending start time information, reference signal time difference (reference signal time difference, RSTD) information, reference signal time difference uncertainty RSTD-uncertainty information, and the reference signal resource set information.

The reference signal identification information (dl-PRS-ID) is used together with a downlink PRS resource set identifier and a downlink PRS resource identifier to uniquely identify a downlink PRS resource, and is associated with a single TRP. For specific descriptions, refer to 3GPP TS 37.355. Details are not described herein.

The cell identification information may include a physical cell identifier (nr-PhysCellID) and a global cell identifier (nr-CellGlobalID). The nr-PhysCellID indicates a physical cell identifier of a TRP, and the nr-CellGlobalID indicates an NCGI, that is, a globally unique identifier of an NR unit defined in TS 38.331[35]. For specific descriptions, refer to 3GPP TS 37.355. Details are not described herein.

The frequency information (nr-ARFCN) indicates the NR-ARFCN of the TRP. For specific descriptions, refer to 3GPP TS 37.355. Details are not described herein.

The reference signal sending start time information (nr-DL-PRS-SFNO-Offset) indicates a time offset of the SFN #0 timeslot #0 of a given TRP relative to the SFN #0 timeslot #0 of the assistance data reference TRP. For specific descriptions, refer to 3GPP TS 37.355. Details are not described herein.

The reference signal time difference information (nr-DL-PRS-ExpectedRSTD) indicates an RSTD value that a target device (the terminal device) expects to measure between the TRP and the assistance data reference TRP. For specific descriptions, refer to 3GPP TS 37.355. Details are not described herein.

The foregoing reference signal time difference uncertainty information indicates uncertainty of an nr DL PRS ExpectedRSTD value. This uncertainty is related to prior estimation of the target device location by the positioning server (In this application, the positioning server may be understood as a positioning management device). For specific descriptions, refer to 3GPP TS 37.355. Details are not described herein.

Optionally, the reference signal resource set information may include one or more of the following information: reference signal resource set identification information, periodicity information, interval information, density information, a symbol quantity, information indicating that simultaneous sending is not supported, information indicating that simultaneous receiving is not supported, power information, and the reference signal resource information; the information indicating that simultaneous sending is not supported means that during sending of the reference signal by the terminal, sending of other information or a reference signal other than the reference signal is not supported; and the information indicating that simultaneous receiving is not supported means that during receiving of the reference signal, receiving of other information or a reference signal other than the reference signal is not supported.

The periodicity information and the interval information (dl-PRS-Periodicity-and-ResourceSetSlotOffset) indicate a downlink PRS allocation periodicity in a timeslot configured by using each downlink PRS resource set, and a timeslot offset of a TRP configured for the downlink PRS resource set relative to the timeslot # 0 of the SFN #0. For specific descriptions, refer to 3GPP TS 37.355. Details are not described herein.

The foregoing density information (dl-PRS-ResourceRepetitionFactor) indicates how many times each downlink PRS resource is repeated for a single instance of the downlink PRS resource set. For specific descriptions, refer to 3GPP TS 37.355. Details are not described herein.

The symbol quantity (dl-PRS-NumSymbols) indicates a symbol quantity of each downlink PRS resource in one slot. For specific descriptions, refer to 3GPP TS 37.355. Details are not described herein.

The power information (dl-PRS-ResourcePower) indicates an average EPRE of a resource element that carries a PRS used for PRS transmission in dBm. For specific descriptions, refer to 3GPP TS 37.355. Details are not described herein.

Optionally, the reference signal resource information may include one or more of the following information: a reference signal resource identifier, reference signal sequence identification information, interval information, and reference signal resource sending/receiving start time information.

The reference signal sequence identification information (dl-PRS-SequenceID) indicates the sequence Id used to initialize a cinit value used in pseudo random generator TS 38.211 [41, 5.2.1] for generation of a downlink PRS sequence for transmission on a given downlink PRS resource. For specific descriptions, refer to 3GPP TS 37.355. Details are not described herein.

The spacing information (dl-PRS-CombSizeN-AndReOffset) indicates a resource element spacing in each symbol of the downlink PRS resource and a resource element (RE) offset in a frequency domain of a first symbol in the downlink PRS resource. For specific descriptions, refer to 3GPP TS 37.355. Details are not described herein.

The reference signal resource sending/receiving start time information may include one or more of the following: reference signal resource sending/receiving start timeslot information, and reference signal resource sending/receiving start symbol information.

The reference signal resource sending/receiving start timeslot information (dl-PRS-ResourceSlotOffset) indicates a start timeslot of the downlink PRS resource relative to a corresponding downlink PRS resource set timeslot offset (This field specifies the starting slot of the DL-PRS Resource with respect to the corresponding DL-PRS-Resource Set Slot Offset). The reference signal resource sending/receiving start symbol information (dl-PRS-Resource Symbol Offset) indicates a start symbol of a DL-PRS resource in a timeslot determined by using a downlink PRS ResourceSlotOffset (This field specifies the starting symbol of the DL-PRS Resource within a slot determined by dl-PRS-ResourceSlotOffset).

In a possible implementation, the first assistance information may include one or more pieces of frequency layer information. For example, an IE of the first assistance information (for details, refer to the specification 3GPP TS 37.355) may be as follows: NR-DL-PRS-

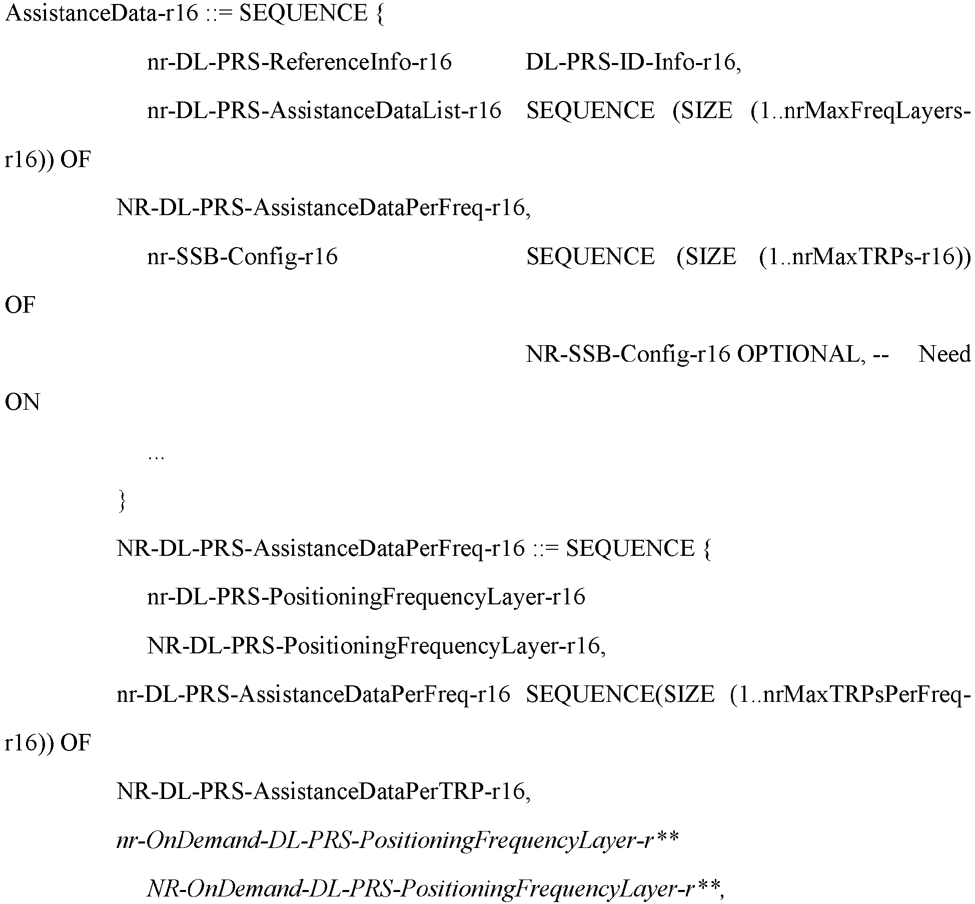

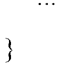

In still another possible implementation, the first assistance information may include one or more pieces of sending-receiving node information. For example, the IE of the first assistance information (for details, refer to the specification 3GPP TS 37.355) may be as follows:

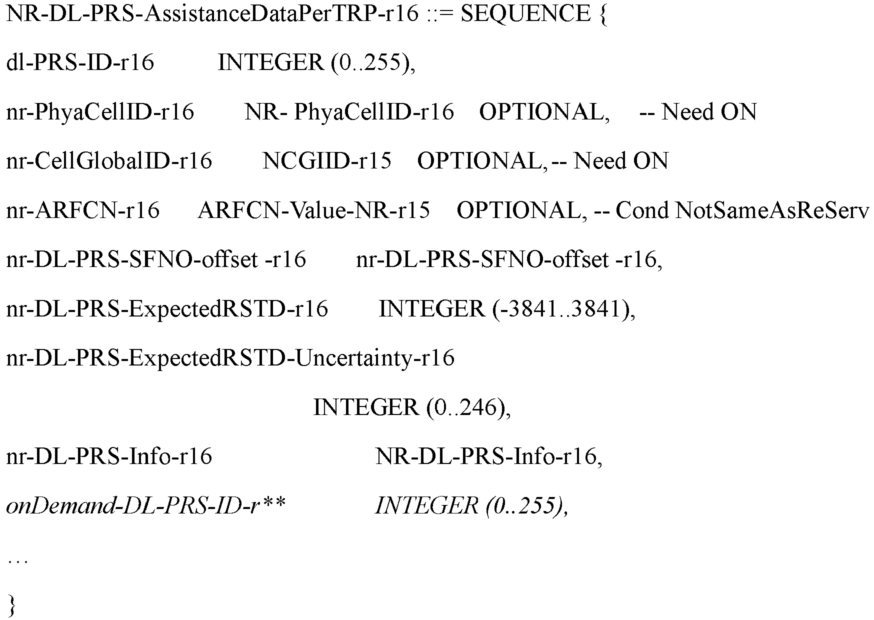

In still another possible implementation, the first assistance information may include one or more pieces of reference signal resource set information. For example, the IE of the first assistance information (for details, refer to the specification 3GPP TS 37.355) may be as follows:

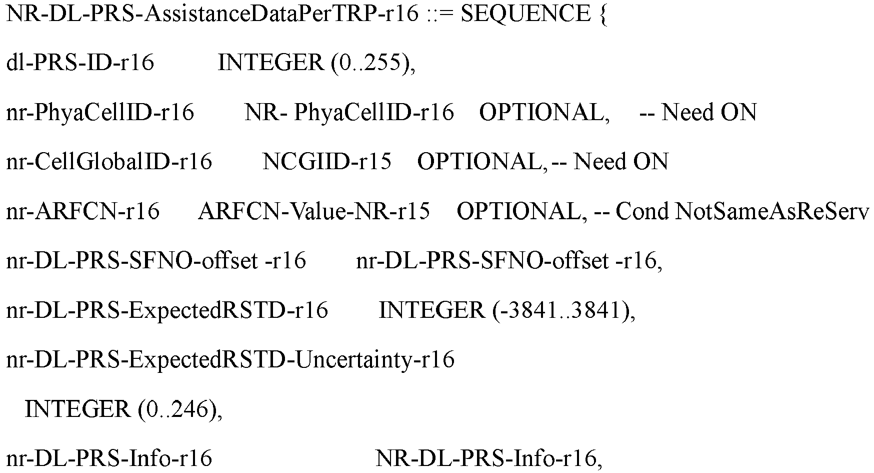

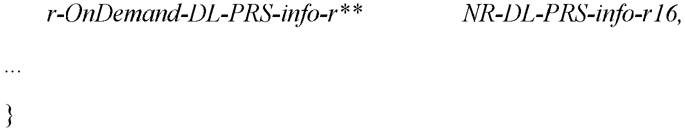

In still another possible implementation, the first assistance information may include one or more pieces of reference signal resource set information. For example, the IE of the first assistance information (for details, refer to the specification 3GPP TS 37.355) may be as follows:

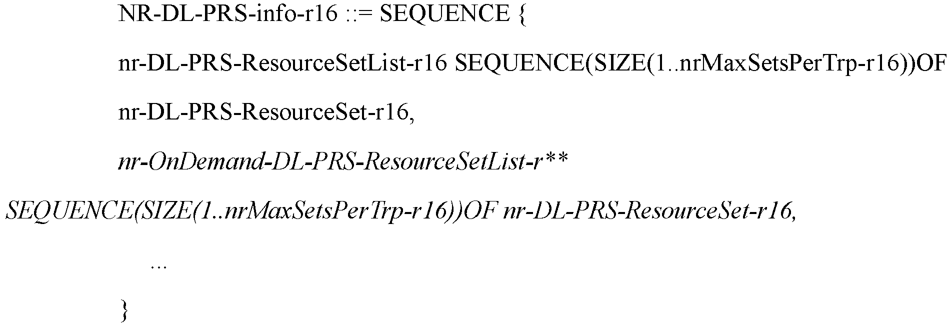

In still another possible implementation, the first assistance information may include one or more pieces of reference signal resource information. For example, the IE of the first assistance information (for details, refer to the specification 3GPP TS 37.355) may be as follows:

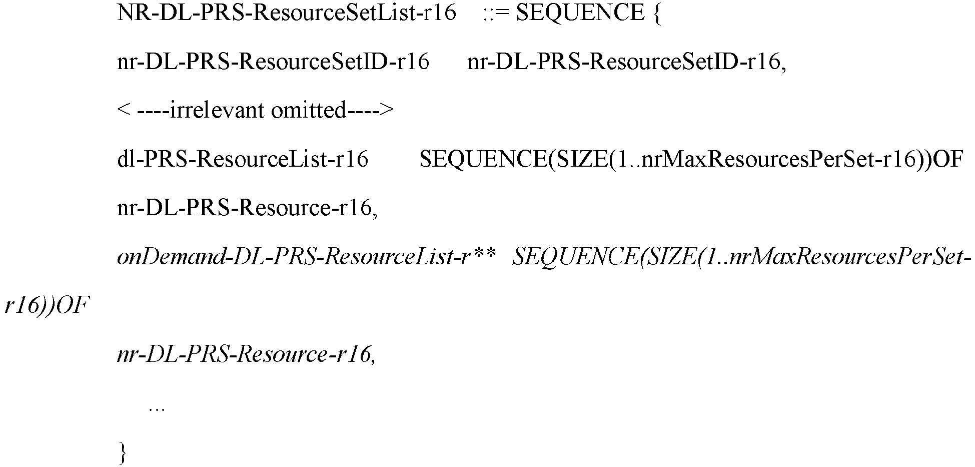

In still another possible implementation, the first assistance information includes one or more of the following information: one or more pieces of frequency layer information, one or more pieces of sending-receiving node information, one or more pieces of reference signal resource set information, and one or more pieces of reference signal resource information. The IE (for details, refer to the specification 3GPP TS 37.355) of the first assistance information may be any combination in the foregoing example. Details are not described herein again.

The signaling in italics is an example of a newly added IE in the present invention. It should be noted that in this application, r** may be understood as r17 or a protocol version later than r17 (for example, r18 or r19). This is not limited herein.

With reference to the IE of the first assistance information, it can be learned that the one or more pieces of frequency layer information in the first assistance information may be included in third signaling, and the third signaling may be predefined signaling or fixed signaling. This is not limited herein. For example, the third signaling may be signaling nr-OnDemand-DL-PRS-PositioningFrequencyLayer, signaling with a similar definition or function, signaling with an extension field, or signaling with an extension field of nr-OnDemand-DL-PRS-PositioningFrequencyLayer. This is not limited herein. The third signaling may include the first signaling. This is not limited herein.

For the signaling nr-DL-PRS-PositioningFrequencyLayer, the terminal device needs to perform corresponding PRS measurement after receiving the signaling nr-DL-PRS-PositioningFrequencyLayer. For the third signaling, the terminal device may not need to perform corresponding PRS measurement immediately after receiving the third signaling, for example, may perform the corresponding PRS measurement after a positioning service request ends; and when a preset condition is met, the terminal device sends, to the first network device, one or more pieces of frequency layer information requested by the terminal device.

In a possible implementation, the preset condition may include one or more of the following: a reference signal strength measured by the terminal device is less than or equal to a preset first reference signal strength; a measurement result error of the terminal device is greater than or equal to a preset first measurement result error; and; a positioning precision measured by the terminal device is less than or equal to a preset first positioning precision; and a positioning precision error measured by the terminal device is greater than or equal to a preset first positioning precision error.

The reference signal strength measured by the terminal device and the preset first reference signal strength may include one of the following: reference signal received power (reference signal received power, RSRP), reference signal received quality (reference signal received quality, RSRQ), and signal to interference plus noise ratio (signal to interference plus noise ratio, SINR). This is not limited herein.

The measurement result of the terminal device may be a measurement quantity directly or indirectly obtained after the terminal device performs the PRS measurement. For example, the measurement result of the terminal device may include one of the following: A PRS reference signal received power (reference signal received power, RSRP), a reference signal time difference (Reference Signal Time Difference, RSTD, a relative time difference between the reference TRP and a TRP of a neighboring cell), a time difference between receiving and sending (a time difference between receiving and sending a reference signal).

The measurement result error of the terminal device may be an error of a measurement quantity obtained directly or indirectly after the terminal device performs the PRS measurement. For example, the measurement result error of the terminal device may be obtained or evaluated by using measurement quality (Timing Quality).

The positioning precision (positioning accuracy) measured by the terminal device may be a deviation that is obtained by the terminal device, the positioning management device, the access network device, or the like based on a measurement result and other assistance data and that is about a location of the terminal device deviating from an actual location.

The positioning precision error measured by the terminal device may be an error, obtained by the terminal device, the positioning management device, the access network device, or the like, about positioning precision of the terminal device, for example, may be obtained or evaluated by using a confidence level (confidence level).

The preset first reference signal strength, the preset first measurement result error, the preset first positioning precision, and the preset first positioning precision error may be predefined by the positioning management device or the access network device, or may be fixed. This is not limited herein.

In still another possible implementation, the preset condition may include one or more of the following: a reference signal strength measured by the terminal device is greater than a preset first reference signal strength; a measurement result error of the terminal device is less than a preset first measurement result error; a positioning precision measured by the terminal device is greater than a preset first positioning precision; and a positioning precision error measured by the terminal device is less than a preset first positioning precision error.

In still another possible implementation, the preset condition may include one or more of the following:
a reference signal strength measured by the terminal device is less than or equal to a preset second reference signal strength, and the reference signal strength measured by the terminal device is greater than or equal to a preset third reference signal strength;
a measurement result error of the terminal device is less than or equal to a preset second measurement result error, and the measurement result error of the terminal device is greater than or equal to a preset third measurement result error;
a positioning precision measured by the terminal device is less than or equal to a preset second positioning precision, and the positioning precision measured by the terminal device is greater than or equal to a preset third positioning precision; and
a positioning precision error measured by the terminal device is less than or equal to a preset second positioning precision error, and the positioning precision error measured by the terminal device is greater than or equal to a preset third positioning precision error.

The preset second reference signal strength and the preset third reference signal strength may include one of the following: reference signal received power (reference signal received power, RSRP), reference signal received quality (reference signal received quality, RSRQ), and signal to interference plus noise ratio (signal to interference plus noise ratio, SINR). This is not limited herein.

The preset second reference signal strength, the preset third reference signal strength, the preset second positioning precision, the preset third positioning precision, the preset second positioning precision error, and the preset third positioning precision error may be predefined by the positioning management device or the access network device, or may be fixed. This is not limited herein.

The preset first reference signal strength may be greater than or equal to the preset second reference signal strength, or the preset first reference signal strength may be less than or equal to the preset third reference signal strength. The preset first measurement result error may be greater than or equal to the preset second measurement result error, or the preset first positioning precision may be less than or equal to the preset third positioning precision. The preset first positioning precision may be greater than or equal to the preset second positioning precision, or the preset first positioning precision may be less than or equal to the preset third positioning precision. The preset first positioning precision error may be greater than or equal to the preset second positioning precision error, or the preset first positioning precision error may be less than or equal to the preset third positioning precision error. This is not limited herein.

In still another possible implementation, the preset condition may include one or more of the following:
a reference signal strength measured by the terminal device is less than or equal to a preset second reference signal strength;
a measurement result error of the terminal device is less than or equal to a preset second measurement result error;
a positioning precision measured by the terminal device is less than or equal to a preset second positioning precision; and
a positioning precision error measured by the terminal device is less than or equal to a preset second positioning precision error.

In still another possible implementation, the preset condition may include one or more of the following:
a reference signal strength measured by the terminal device is greater than a preset second reference signal strength;
a measurement result error of the terminal device is greater than a preset second measurement result error;
a positioning precision measured by the terminal device is greater than a preset second positioning precision; and
a positioning precision error measured by the terminal device is greater than a preset second positioning precision error.

In still another possible implementation, the preset condition may include one or more of the following:
a reference signal strength measured by the terminal device is greater than or equal to a preset third reference signal strength;
a measurement result error of the terminal device is greater than or equal to a preset third measurement result error;
a positioning precision measured by the terminal device is greater than or equal to a preset third positioning precision; and
a positioning precision error measured by the terminal device is greater than or equal to a preset third positioning precision error.

In still another possible implementation, the preset condition may include one or more of the following:
a reference signal strength measured by the terminal device is less than a preset third reference signal strength;
a measurement result error of the terminal device is less than a preset third measurement result error;
a positioning precision measured by the terminal device is less than a preset third positioning precision; and
a positioning precision error measured by the terminal device is less than a preset third positioning precision error.

The third information may include one or more of the following: a preset first reference signal strength, a preset second reference signal strength, a preset third reference signal strength, a preset first measurement result error, a preset second measurement result error, a preset third measurement result error, a preset first positioning precision, a preset second positioning precision, a preset third positioning precision, a preset first positioning precision error, a preset second positioning precision error, and a preset third positioning precision error.

In a possible implementation, the terminal device may receive third information sent by the first network device, where the third information indicates the terminal device to send the second information to the first network device when a preset condition is met.

It may be understood that the terminal device may receive third information sent by the access network device or the positioning management device. In a possible implementation, the first information and the third information may be located in a same message, or may be located in different messages. This is not limited herein.

For example, a second RRC message or a second system information may include the third information, and the second RRC message may be the same as or different from the first RRC message. The first system information may be the same as or different from the second system information. This is not limited herein. For example, the second system information may include a second positioning system information block (positioning system information block, posSIB), and the second posSIB may include the third information. This is not limited herein.

For example, the terminal device may further obtain the third information from an external interface.

In still another possible implementation, the third information may include third assistance information, and the third assistance information may include one or more of the following: a preset first reference signal strength, a preset second reference signal strength, a preset third reference signal strength, a preset first measurement result error, a preset second measurement result error, a preset third measurement result error, a preset first positioning precision, a preset second positioning precision, a preset third positioning precision, a preset first positioning precision error, a preset second positioning precision error, and a preset third positioning precision error.

For example, the IE of the third information or the third assistance information (for details, refer to the specification 3GPP TS 37.355), for example, may as follows:

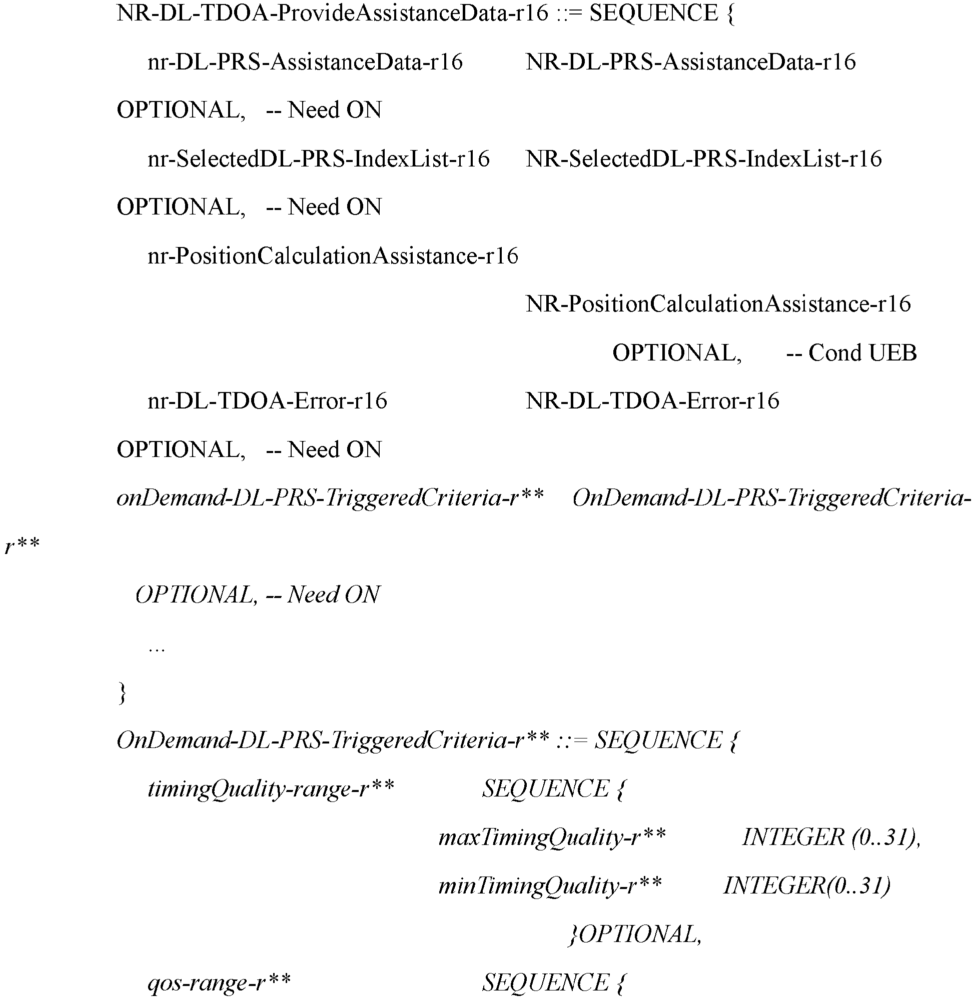

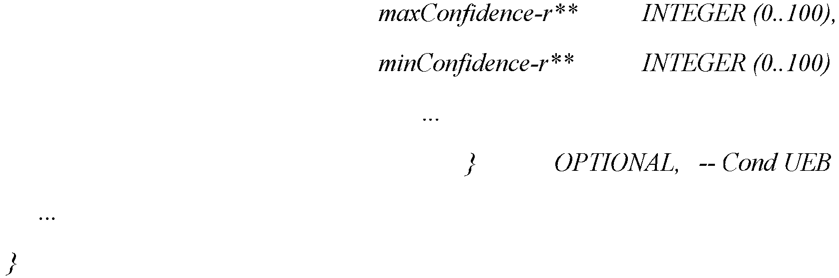

With reference to the IE of the third information or the third assistance information, it can be learned that the third information or the third assistance information may be included in fourth signaling, and the fourth signaling may be predefined signaling or fixed signaling. This is not limited herein. For example, the fourth signaling may be signaling OnDemand-DL-PRS-TriggeredCriteria, signaling with a similar definition or function, signaling with an extension field, or signaling with an extension field of OnDemand-DL-PRS-TriggeredCriteria. This is not limited herein. Further, the fourth signaling may be included in signaling NR-DL-TDOA-ProvideAssistanceData-r16, signaling with a similar definition or function, signaling with an extension field, or signaling with an extension field of NR-DL-TDOA-ProvideAssistanceData-r16. This is not limited herein.

For example, the fourth signaling may include one or more of the following: a preset first reference signal strength, a preset second reference signal strength, a preset third reference signal strength, a preset first measurement result error, a preset second measurement result error, a preset third measurement result error, a preset first positioning precision, a preset second positioning precision, a preset third positioning precision, a preset first positioning precision error, a preset second positioning precision error, and a preset third positioning precision error. This is not limited herein.

For example, the fourth signaling may include first sub-signaling and second sub-signaling, and the first sub-signaling and the second sub-signaling in the fourth signaling may be predefined signaling or fixed signaling. This is not limited herein. For example, the first sub-signaling in the fourth signaling may be signaling TimingQuality-range, signaling with a similar definition or function, signaling with an extension field, or signaling with an extension field of TimingQuality-range. This is not limited herein. The second sub-signaling in the fourth signaling may be signaling qos-range, signaling with a similar definition or function, signaling with an extension field, or signaling with an extension field of qos-range-r**. This is not limited herein.

It may be understood that in this application, the preset first reference signal strength, the preset second reference signal strength, the preset third reference signal strength, the preset first measurement result error, the preset second measurement result error, and the preset third measurement result error may be included in the first sub-signaling in the fourth signaling. The preset first positioning precision, the preset second positioning precision, the preset third positioning precision, the preset first positioning precision error, the preset second positioning precision error, and the preset third positioning precision error may be included in the second sub-signaling in the fourth signaling.

With reference to the IE of the first assistance information, it can be learned that the one or more pieces of sending-receiving node information in the first assistance information may be included in the first sub-signaling in the third signaling, and the first sub-signaling in the third signaling may be predefined signaling or fixed signaling. This is not limited herein. For example, the first sub-signaling in the third signaling may be signaling NR-DL-PRS-AssistanceDataPerTRP-r16, signaling with a similar definition or function, signaling with an extension field, or signaling with an extension field of NR-DL-PRS-AssistanceDataPerTRP-r16. This is not limited herein.

The first sub-signaling in the third signaling may further include a first identifier, and the first identifier indicates that the terminal device does not need to perform corresponding PRS measurement immediately after receiving the first sub-signaling in the third signaling, for example, may perform the corresponding PRS measurement after the positioning service request ends; and when the preset condition is met, the terminal device sends, to the first network device, one or more pieces of sending and/or receiving node information requested by the terminal device.

For example, the first identifier may be onDemand-DL-PRS-ID.

With reference to the IE of the first assistance information, it can be learned that the one or more pieces of reference signal resource set information in the first assistance information may be included in second sub-signaling in the first sub-signaling (the first sub-signaling is signaling in the third signaling), and the second sub-signaling in the first sub-signaling (the first sub-signaling is the signaling in the third signaling) is predefined signaling or fixed signaling. This is not limited herein. For example, the second sub-signaling in the first sub-signaling (the first sub-signaling is the signaling in the third signaling) may be signaling nr-OnDemand-DL-PRS-Info, signaling with a similar definition or function, signaling with an extension field, or signaling with an extension field of nr-OnDemand-DL-PRS-Info. Alternatively, the second sub-signaling in the first sub-signaling (the first sub-signaling is the signaling in the third signaling) may be signaling nr-OnDemand-DL-PRS-ResourceSetList, signaling with a similar definition or function, signaling with an extension field, or signaling with an extension field of nr-OnDemand-DL-PRS-ResourceSetList. This is not limited herein. The terminal device does not need to perform corresponding PRS measurement immediately after receiving the second sub-signaling in the first sub-signaling (the first sub-signaling is the signaling in the third signaling), for example, may perform the corresponding PRS measurement after the positioning service request ends; and when the preset condition is met, the terminal device sends, to the first network device, a downlink PRS resource set in one or more pieces of sending and/or receiving node information requested by the terminal device.

With reference to the IE of the first assistance information, it can be learned that one or more pieces of reference signal resource information in the first assistance information may be included in third sub-signaling in the second sub-signaling (the second sub-signaling is signaling in the first sub-signaling, and the first sub-signaling is the signaling in the third signaling), and the third sub-signaling in the second sub-signaling (the second sub-signaling is the signaling in the first sub-signaling, and the first sub-signaling is the signaling in the third signaling) is predefined signaling or fixed signaling. This is not limited herein. For example, the third sub-signaling in the second sub-signaling (the second sub-signaling is the signaling in the first sub-signaling, and the first sub-signaling is the signaling in the third signaling) may be signaling onDemand-DL-PRS-ResourceList, or signaling with a similar definition or function, or signaling with an extension field, or signaling with an extension field of onDemand-DL-PRS-ResourceList. This is not limited herein. The terminal device does not need to perform corresponding PRS measurement immediately after receiving the second sub-signaling (the second sub-signaling is the signaling in the first sub-signaling, and the first sub-signaling is the signaling in the third signaling), for example, may perform the corresponding PRS measurement after the positioning service request ends; and when the preset condition is met, the terminal device sends, to the first network device, one or more downlink PRS resources in the downlink PRS resource set requested by the terminal device.

For example, the IE of the second assistance information, for example, may be as follows:

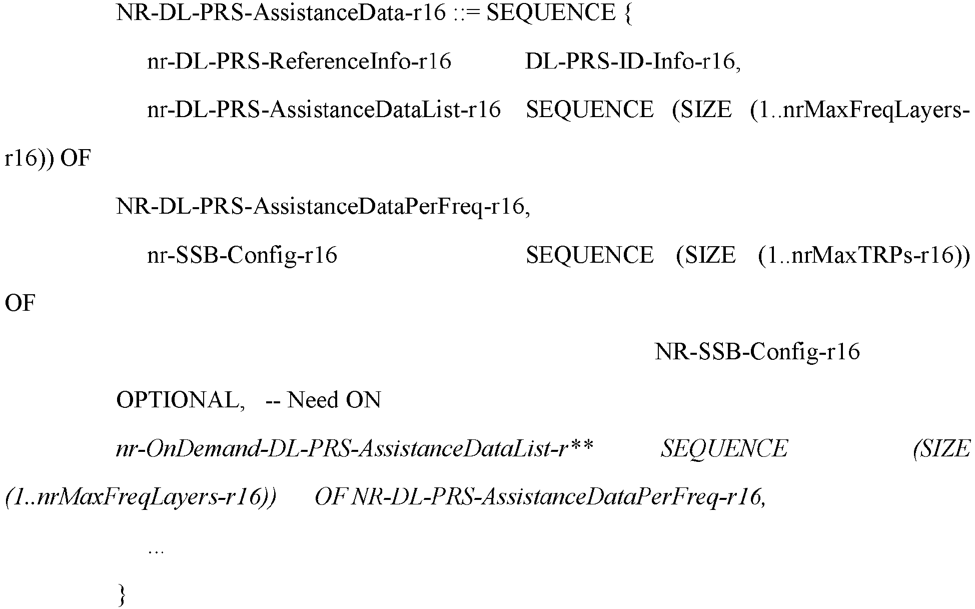

With reference to the IE of the second assistance information, it can be learned that the second assistance information may be included in fifth signaling, and the fifth signaling may be predefined signaling. For example, the fifth signaling may be signaling nr-OnDemand-DL-PRS-AssistanceDataList, signaling with a similar definition or function, signaling with an extension field, or signaling with an extension field of nr-OnDemand-DL-PRS-AssistanceDataList. This is not limited herein.

It may be understood that the fifth signaling may be signaling included in NR-DL-PRS-AssistanceData-r16, signaling with a similar definition or function, signaling with an extension field, or signaling with an extension field of NR-DL-PRS-AssistanceData-r16. This is not limited herein.

402: The first network device receives second information sent by the terminal device, where the second information includes a second reference signal configuration information set requested by the terminal device, and the second reference signal configuration information set includes one or more pieces of reference signal configuration information.

Correspondingly, the terminal device receives second information sent by the first network device.

Optionally, in step 402, the first network device may be an access network device, and the access network device may receive the second information sent by the terminal device. Alternatively, in step 402, the first network device may be a positioning management device, and the positioning management device may receive the second information sent by the terminal device. This is not limited herein.

It may be understood that the receiving, by the access network device, the second information sent by the terminal device includes: The access network device may receive a third RRC message or third system information sent by the terminal device, where the third RRC message or the third system information includes the second information.

In a possible implementation, the third system information may include a third positioning system information block (positioning system information block, posSIB), and the third posSIB may include the second information.

It may be understood that the receiving, by the positioning management device, the second information sent by the terminal device includes: The positioning management device receives a second LPP message sent by the terminal device, where the second LPP message may include the second information.

It should be noted that in this application, if the terminal device receives the first information sent by the access network device in step 401, the access network device receives the second information sent by the terminal device (correspondingly, the terminal device sends the second information to the access network device), or the positioning management device receives the second information sent by the terminal device (correspondingly, the terminal device sends the second information to the positioning management device) in step 402. If the terminal device receives the first information sent by positioning management device in step 401, the access network device receives the second information sent by the terminal device (correspondingly, the terminal device sends the second information to the access network device), or the positioning management device receives the second information sent by the terminal device (correspondingly, the terminal device sends the second information to the positioning management device) in step 402. If the terminal device receives the first information from the external interface in step 401, the access network device receives the second information sent by the terminal device (correspondingly, the terminal device sends the second information to the access network device), or the positioning management device receives the second information sent by the terminal device (correspondingly, the terminal device sends the second information to the positioning management device) in step 402. This is not limited herein.

In a possible implementation, all or partial reference signal configuration information in the second reference signal configuration information set may be included in the first reference signal configuration information set, or the second reference signal configuration information set may not be included in the first reference signal configuration information set. This is not limited herein.

All or partial reference signal configuration information in the second reference signal configuration information set may be included in the first reference signal configuration information set, which may be understood as follows: one or more pieces of frequency layer information in the second reference signal configuration information set may be completely or partially included in one or more pieces of frequency layer information in the first reference signal configuration information set; and/or one or more pieces of sending-receiving node information in the second reference signal configuration information set may be completely or partially included in one or more pieces of sending-receiving node information in the first reference signal configuration information set; and/or one or more pieces of reference signal resource set information in the second reference signal configuration information set may be completely or partially included in one or more pieces of reference signal resource set information in the first reference signal configuration information set; and/or one or more pieces of reference signal resource information in the second reference signal configuration information set may be completely or partially included in one or more pieces of reference signal resource information in the first reference signal configuration information set. This is not limited herein.

For example, in a possible implementation, the one or more pieces of reference signal configuration information included in the second reference signal configuration information set may be an identifier or identifiers of the one or more pieces of reference signal configuration information, and one piece of reference signal configuration information in the one or more pieces of reference signal configuration information included in the second reference signal configuration information set may be corresponding to an identifier of one piece of reference signal configuration information in the identifier or identifiers of the one or more pieces of reference signal configuration information. The identifier or identifiers of the one or more pieces of reference signal configuration information may be an identifier or identifiers of the one or more pieces of reference signal configuration information in the first reference signal configuration information set. It may be understood that, for example, the identifier of the reference signal configuration information may include one or more of the following: an identifier of the frequency layer information, an identifier of the sending-receiving node information, an identifier of the reference signal resource set information, and an identifier of the reference signal resource information.

It can be learned that, in the foregoing technical solution, because the terminal device may determine the second reference signal configuration information set based on the first reference signal configuration information set, and send the second reference signal configuration information set to the first network device. However, the one or more pieces of reference signal configuration information included in the second reference signal configuration information set are an identifier or identifiers of the one or more pieces of reference signal configuration information. Therefore, signaling overheads and power consumption of the terminal device can be reduced.

Optionally, that the second reference signal configuration information set is not included in the first reference signal configuration information set may be understood as follows: no frequency layer information in the second reference signal configuration information set is included in one or more pieces of frequency layer information in the first reference signal configuration information set; none of one or more pieces of sending-receiving node information in the second reference signal configuration information set is included in one or more pieces of sending-receiving node information in the first reference signal configuration information set; none of the one or more pieces of reference signal resource set information in the second reference signal configuration information set is included in one or more pieces of reference signal resource set information in the first reference signal configuration information set; and none of one or more pieces of reference signal resource information in the second reference signal configuration information set is included in one or more pieces of reference signal resource information in the first reference signal configuration information set. This is not limited herein.

Optionally, that the second reference signal configuration information set is not included in the first reference signal configuration information set may be understood as follows: each piece of reference signal configuration information of the one or more pieces of reference signal configuration information included in the second reference signal configuration information set may include one or more of the following information: a priority of a frequency layer, a priority of a transmission node, a priority of a downlink reference signal resource set, and a priority of a downlink reference signal resource. This is not limited herein.

Optionally, the second information may further include one or more of the following: a priority of a frequency layer, a priority of a sending-receiving node, a priority of a reference signal resource set, and a priority of a reference signal resource.

Optionally, the second information may further include one or more of the following: an identifier of a secondary cell, an identifier of an activated bandwidth part (bandwidth part, BWP) resource of the secondary cell, configuration information of the activated BWP resource of the secondary cell, an identifier of a deactivated BWP resource of the secondary cell, and configuration information of the deactivated BWP resource of the secondary cell.

The configuration information of the activated or deactivated BWP resource includes one or more of the following information: a start frequency domain location, a bandwidth, a cyclic prefix, and a subcarrier spacing.

Optionally, the second information may further include secondary cell (secondary cell, Scell) information, and the Scell information may include one or more of the following: an identifier of a secondary cell, an identifier of an activated bandwidth part (bandwidth part, BWP) resource of the secondary cell, configuration information of the activated BWP resource of the secondary cell, an identifier of a deactivated BWP resource of the secondary cell, and configuration information of the deactivated BWP resource of the secondary cell.

In a possible implementation, the second information may include one or more of the following information: an identifier of the frequency layer information, an identifier of the sending-receiving node information, an identifier of the reference signal resource set information, and an identifier of the reference signal resource information. The second information may further include one or more of the following: a priority of a frequency layer, a priority of a sending-receiving node, a priority of a reference signal resource set, and a priority of a reference signal resource.

For example, the IE of the second information (for details, refer to the specification 3GPP TS 37.355) may be as follows:

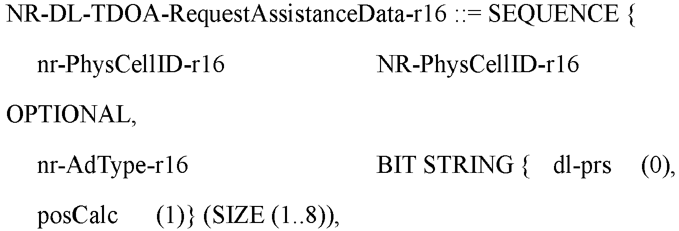

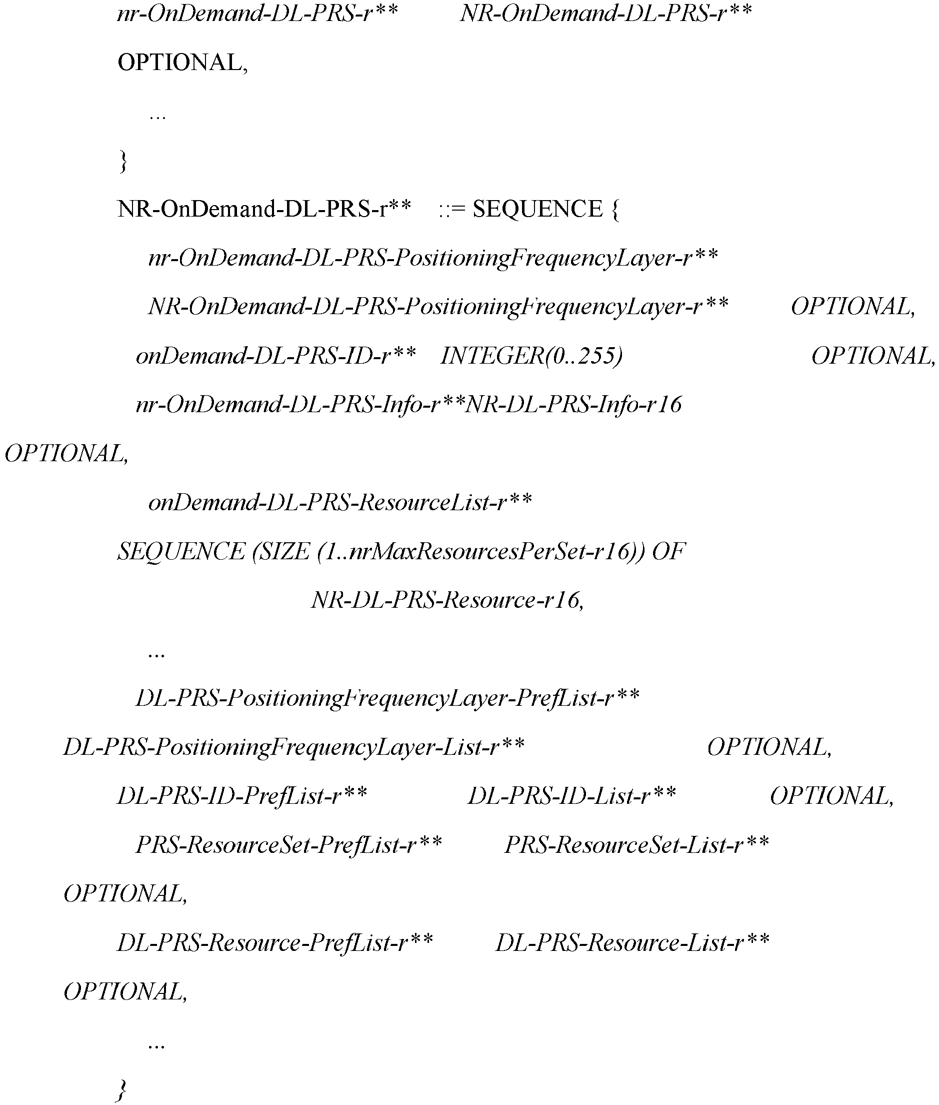

In a possible implementation, the second information may include one or more of the following: an identifier of a secondary cell, an identifier of an activated bandwidth part (bandwidth part, BWP) resource of the secondary cell, configuration information of the activated BWP resource of the secondary cell, an identifier of a deactivated BWP resource of the secondary cell, and configuration information of the deactivated BWP resource of the secondary cell. For example, the IE of the second information (for details, refer to the specification 3GPP TS 37.355), for example, may be as follows:

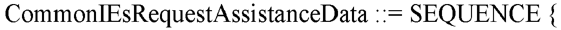

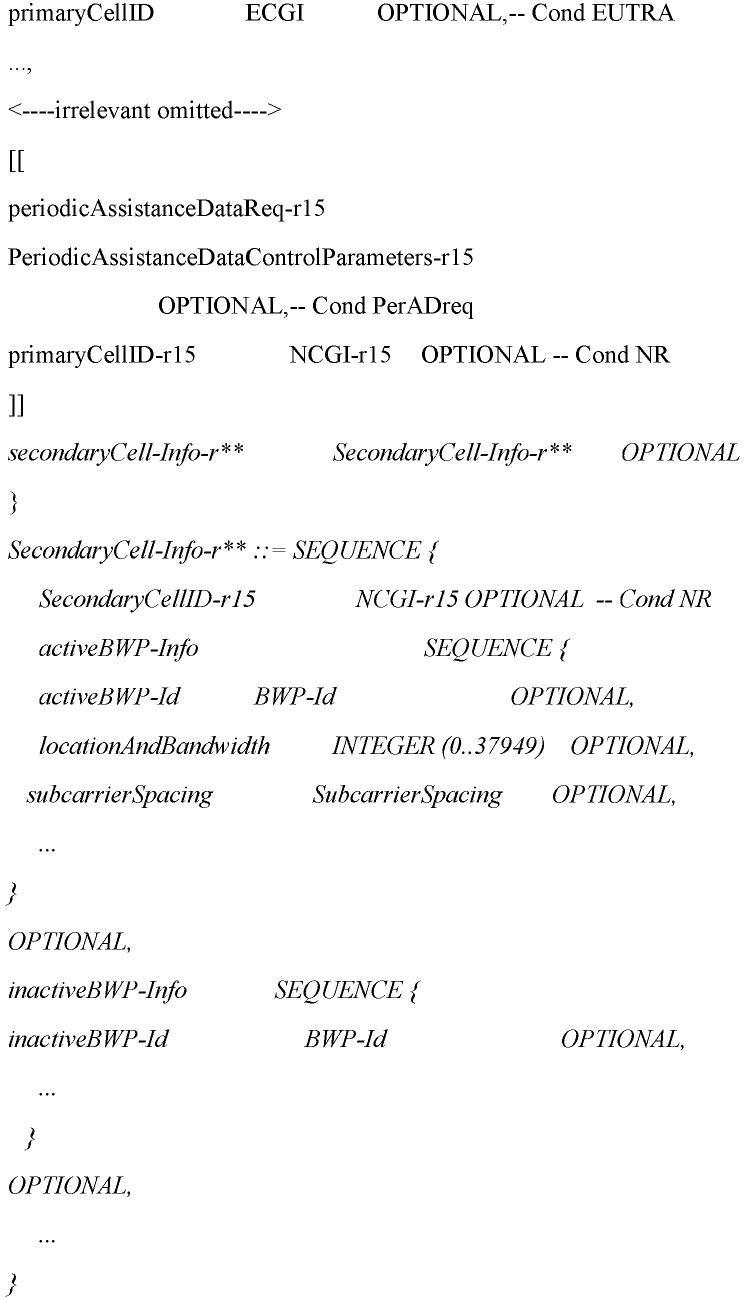

With reference to the IE of the second information, it can be learned that the second information may be included in sixth signaling, and the sixth signaling may be predefined signaling or fixed signaling. This is not limited herein. The sixth signaling may include first sub-signaling and second sub-signaling.

Specifically, the first sub-signaling in the sixth signaling may be included in signaling NR-DL-TDOA-RequestAssistanceData-r16, signaling with a similar definition or function, signaling with an extension field, or signaling with an extension field of NR-DL-TDOA-RequestAssistanceData-r16. This is not limited herein. For example, the first sub-signaling in the sixth signaling may be signaling NR-OnDemand-DL-PRS, or signaling with a similar definition or function, or signaling with an extension field, or signaling with an extension field of NR-OnDemand-DL-PRS. This is not limited herein. Further, the one or more frequency layer information, the one or more sending and/or receiving node information, the one or more reference signal resource set information, the one or more reference signal resource information, the priority of the frequency layer, the priority of the transmission node, the priority of the downlink reference signal resource set, and the priority of the downlink reference include the second information may be included in the first sub-signaling in the sixth signaling.

Specifically, the second sub-signaling in the sixth signaling may be included in signaling CommonIEsRequestAssistanceData, signaling with a similar definition or function, signaling with an extension field, or signaling with an extension field of CommonIEsRequestAssistanceData. This is not limited herein. For example, the second sub-signaling in the sixth signaling may be signaling SecondaryCell-Info (SecondaryCell Info indicates that when a carrier aggregation (carrier aggregation, CA) technology is used, the SCell information is provided to the LMF network element to determine PRS configuration of a target device (terminal device). This field is used by the target device to provide the SCell information for LMF to determine the PRS configuration when CA techniques are used), signaling with a similar definition or function, signaling with an extension field, or signaling with an extension field of SecondaryCell-Info. This is not limited herein. Further, the identifier of the secondary cell, the identifier of the activated bandwidth part (bandwidth part, BWP) resource of the secondary cell, the configuration information of the activated BWP resource of the secondary cell, the identifier of the deactivated BWP resource of the secondary cell, and the configuration information of the deactivated BWP resource of the secondary cell included in the second information may be included in the second sub-signaling in the sixth signaling.

It should be noted that, in a possible implementation, there is no specific execution sequence between step 401 and step 402 in this embodiment of this application, and step 401 may be performed before step 402. Alternatively, step 402 may be performed before step 401. Step 401 and step 402 may alternatively be performed at the same time. This is not limited herein.

It can be learned that, in the foregoing technical solution, the terminal device obtains the one or more pieces of reference signal configuration information that may be requested on demand, so as to send, to the first network device, the second reference signal configuration information set requested by the terminal device. That is, the terminal device may send the second information with reference to the first information, so that a success rate of requesting reference signal configuration information by the terminal device is increased, thereby meeting a positioning requirement of the terminal device.

Optionally, the terminal device may receive fourth information sent by a second network device, where the fourth information includes a reference signal configuration information set of the second network device and/or a third reference signal configuration information set, the reference signal configuration information set of the second network device includes one or more pieces of reference signal configuration information sent by the second network device, and the third reference signal configuration information set includes the one or more pieces of reference signal configuration information requested by the terminal device on-demand. The sending, by the terminal device, the second information to a first network device includes: The terminal device sends the second information to the first network device based on the fourth information.

The receiving, by the terminal device, fourth information sent by a second network device may be understood as follows: The terminal device may receive fourth information sent by the access network device or the positioning management device.

In a possible implementation, the receiving, by the terminal device, fourth information sent by the access network device includes: The terminal device receives a fourth RRC message or fourth system information sent by the access network device, where the fourth RRC message or the fourth system information may include the fourth information.

The fourth system information may include a fourth positioning system information block (positioning system information block, posSIB), and the fourth posSIB may include the fourth information.

In a possible implementation, the receiving, by the terminal device, fourth information sent by the positioning management device includes: The terminal device may receive a third LPP message sent by the positioning management device, where the third LPP message may include the fourth information.

It should be noted that, in this application, in a possible implementation, the positioning management device may send a second request message to the access network device, where the second request message is used to obtain the fourth information. The positioning management device may receive a second response message sent by the access network device, where the second response message includes fourth information. The positioning management device may send the fourth information to the terminal device. The second request message and the second response message may be, for example, a new wireless positioning protocol annex (NR positioning protocol annex, NRPPa) message. This is not limited herein.

The reference signal configuration information set of the second network device may be understood as a reference signal configuration information set of the access network device. The reference signal configuration information set of the access network device may be a reference signal configuration information set sent by the access network device before the terminal device sends the second information.

For example, the cell in which the access network device is located includes four terminal devices, and the four terminal devices may include a terminal device A, a terminal device B, a terminal device C, and a terminal device D. It is assumed that the terminal device A, the terminal device B, the terminal device C, and the terminal device D all obtain the first information (It is assumed that a first reference information configuration information set included in the first information includes 5 pieces of reference signal configuration information, and the 5 pieces of reference signal configuration information include reference signal configuration information 1, reference signal configuration information 2, reference signal configuration information 3, reference signal configuration information 4, and reference signal configuration information 5), the terminal device A, the terminal device B, the terminal device C, and the terminal device D may separately determine, based on requirements thereof, to send corresponding second information to the access network device or the positioning management device. Further, if the terminal device A first sends corresponding second information (reference signal configuration information 1) to the access network device or the positioning management device, the terminal device B then sends corresponding second information (reference signal configuration information 4) to the access network device or the positioning management device. Before the terminal device B sends the corresponding second information to the access network device or the positioning management device, a second reference signal configuration information set (reference signal configuration information 1) requested by the terminal device A has been approved (The terminal device A successfully requests a corresponding second reference signal configuration information set (reference signal configuration information 1)). In this case, the reference signal configuration information set of the second network device (the reference signal configuration information set of the access network device) changes.

Situation 1: The access network device may broadcast the reference signal configuration information 2, the reference signal configuration information 3, the reference signal configuration information 4, and the reference signal configuration information 5. In this case, one or more pieces of reference signal configuration information that may be requested by the terminal device B on demand are reference signal configuration information 2, reference signal configuration information 3, and reference signal configuration information 4. In other words, before the terminal device B sends the corresponding second information to the access network device or the positioning management device, the reference signal configuration information set sent by the access network device includes the reference signal configuration information 2, the reference signal configuration information 3, and the reference signal configuration information 4.

Situation 2: The access network device sends the reference signal configuration information 2, the reference signal configuration information 3, the reference signal configuration information 4, and the reference signal configuration information 5 to the positioning management device, and the positioning management device sends the reference signal configuration information 2, the reference signal configuration information 3, the reference signal configuration information 4, and the reference signal configuration information 5 to the terminal device B. In this case, one or more pieces of reference signal configuration information that may be requested by the terminal device B on demand are reference signal configuration information 2, reference signal configuration information 3, and reference signal configuration information 4. In other words, before the terminal device B sends the corresponding second information to the access network device or the positioning management device, the reference signal configuration information set sent by the access network device includes the reference signal configuration information 2, the reference signal configuration information 3, and the reference signal configuration information 4.

In a possible implementation, the sending, by the terminal device, the second information to the first network device based on the fourth information includes: The terminal device sends the second information to the access network device or the positioning management device based on the fourth information.

The terminal device may send the third RRC message or the third system information to the access network device based on the fourth information. The terminal device may send the second LPP message to the positioning management device based on the fourth information. This is not limited herein.

In addition, the terminal device sends the second information to the first network device based on the fourth information. Correspondingly, the first network device receives the second information, the second information is determined based on the fourth information, and the fourth information is sent by the second network device.

A trigger condition for sending the fourth information is that the reference signal configuration information set of the second network device changes.

In a possible implementation, all or partial reference signal configuration information in the third reference signal configuration information set is included in the first reference signal configuration information set. In still another possible implementation, no reference signal configuration information in the third reference signal configuration information set is included in the first reference signal configuration information set.

It can be learned that, in the foregoing technical solution, the terminal device obtains the fourth information, so that the terminal device may send the second information to the first network device based on the latest reference signal configuration information set that is being used by a network in a current phase, and/or information about whether the reference signal configuration information has been requested and successfully configured by another terminal device, and/or information such as reference signal configuration information set that can be requested by the terminal equipment, so that a success rate of requesting the reference signal configuration information by the terminal device is increased, thereby meeting meet a positioning requirement of the terminal device. In addition, this avoids a problem that power consumption of the terminal device increases and network efficiency decreases because the terminal device frequently requests the reference signal configuration information.

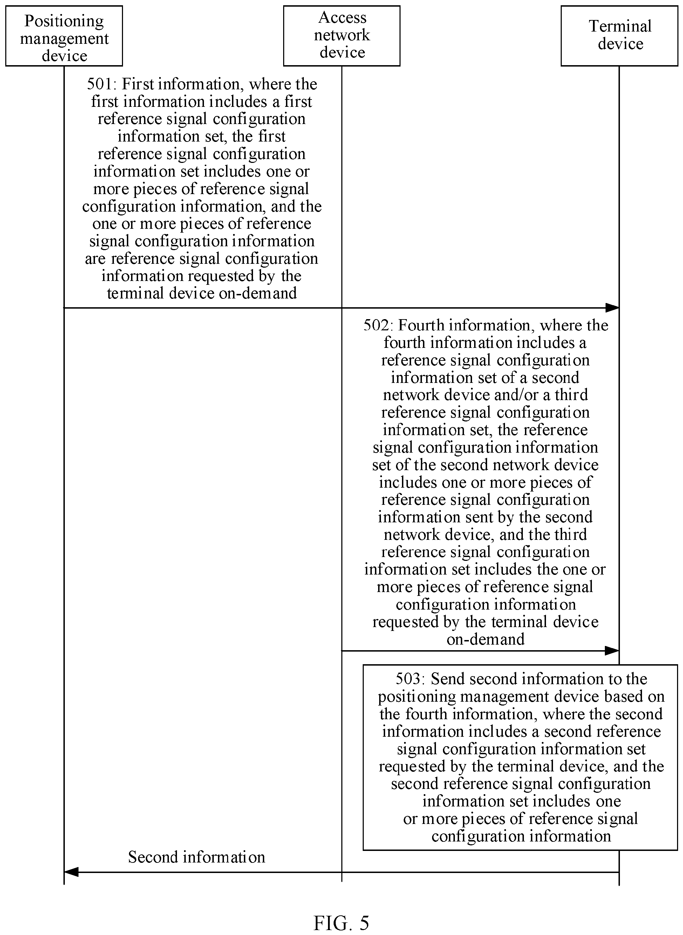

For example, the following describes content of sending first information by a positioning management device to a terminal device and sending second information by the terminal device to the positioning management device. Specifically, FIG. 5 is a schematic flowchart of still another uplink reference signal resource configuration method according to an embodiment of this application. The terminal device in FIG. 5 may be the terminal device 30 in FIG. 1, the access network device in FIG. 5 may be the access network device 101 in FIG. 1, and the positioning management device in FIG. 5 may be the positioning management device 102 in FIG. 1. As shown in FIG. 5, the method includes but is not limited to the following steps.

501: The terminal device receives first information sent by the positioning management device, where the first information includes a first reference signal configuration information set, the first reference signal configuration information set includes one or more pieces of reference signal configuration information, and the one or more pieces of reference signal configuration information are reference signal configuration information requested by a terminal device on-demand.

For step 501, refer to related descriptions in FIG. 4. Details are not described herein again.

For the first information, refer to related descriptions in FIG. 4. Details are not described herein again.

502: The access network device sends fourth information to the terminal device, where the fourth information includes a reference signal configuration information set of a second network device and/or a third reference signal configuration information set, the reference signal configuration information set of the second network device includes one or more pieces of reference signal configuration information sent by the second network device, and the third reference signal configuration information set includes the one or more pieces of reference signal configuration information requested by the terminal device on-demand.

For the fourth information, refer to the foregoing related description. Details are not described herein again.

It should be noted that in this application, step 502 may or may not be performed. This is not limited herein.

In a possible implementation, the positioning management device may send the fourth information to the terminal device in step 502. This is not limited herein.

For sending, by the positioning management device, the fourth information to the terminal device, refer to the foregoing related description. Details are not described herein again.

503: The terminal device sends second information to the positioning management device based on the fourth information, where the second information includes a second reference signal configuration information set requested by the terminal device, and the second reference signal configuration information set includes one or more pieces of reference signal configuration information.

Correspondingly, the terminal device receives second information sent by the first network device.

For step 503, refer to related descriptions in FIG. 4. Details are not described herein again.

For the second information, refer to related descriptions in FIG. 4. Details are not described herein again.

It should be noted that if step 502 is not performed, the terminal device may send the second information to the positioning management device in step 503. This is not limited herein.

It should be noted that, in a possible implementation, there is no specific execution sequence between step 501 and step 503 in this embodiment of this application, and step 501 may be performed before step 503. Alternatively, step 503 may be performed before step 501. Step 501 and step 503 may alternatively be performed at the same time. This is not limited herein.

It can be learned that, in the foregoing technical solution, the terminal device obtains the one or more pieces of reference signal configuration information that may be requested on demand, so as to send, to the positioning management device, the second reference signal configuration information set requested by the terminal device. That is, the terminal device may send the second information with reference to the first information, so that a success rate of requesting reference signal configuration information by the terminal device is increased, thereby meeting a positioning requirement of the terminal device. In addition, the terminal device obtains the fourth information, so that the terminal device may send the second information to the positioning management device based on the latest reference signal configuration information set that is being used by a network in a current phase, and/or information about whether the reference signal configuration information has been requested and successfully configured by another terminal device, and/or information such as reference signal configuration information set that can be requested by the terminal equipment, so that a success rate of requesting the reference signal configuration information by the terminal device is increased, thereby meeting a positioning requirement of the terminal device. In addition, this avoids a problem that power consumption of the terminal device increases and network efficiency decreases because the terminal device frequently requests the reference signal configuration information.

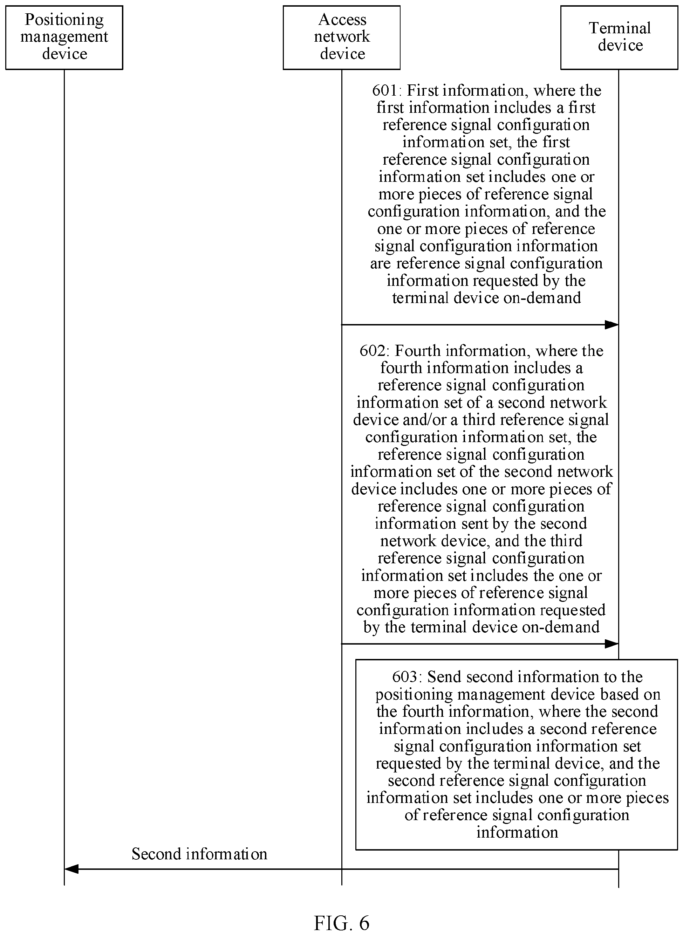

For example, the following describes content of sending first information by an access network device to a terminal device and sending second information by the terminal device to a positioning management device. Specifically, FIG. 6 is a schematic flowchart of still another uplink reference signal resource configuration method according to an embodiment of this application. The terminal device in FIG. 6 may be the terminal device 30 in FIG. 1, the access network device in FIG. 6 may be the access network device 101 in FIG. 1, and the positioning management device in FIG. 6 may be the positioning management device 102 in FIG. 1. As shown in FIG. 6, the method includes but is not limited to the following steps.

601: The terminal device receives first information sent by the access network device, where the first information includes a first reference signal configuration information set, the first reference signal configuration information set includes one or more pieces of reference signal configuration information, and the one or more pieces of reference signal configuration information is reference signal configuration information that is used by the terminal device to request on demand.

For step 601, refer to related descriptions in FIG. 4. Details are not described herein again.

For the first information, refer to related descriptions in FIG. 4. Details are not described herein again.

602: The access network device sends fourth information to the terminal device, where the fourth information includes a reference signal configuration information set of a second network device and/or a third reference signal configuration information set, the reference signal configuration information set of the second network device includes one or more pieces of reference signal configuration information sent by the second network device, and the third reference signal configuration information set includes the one or more pieces of reference signal configuration information requested by the terminal device on-demand.

For the fourth information, refer to the foregoing related description. Details are not described herein again.

It should be noted that in this application, step 602 may or may not be performed. This is not limited herein.

In a possible implementation, the positioning management device may send the fourth information to the terminal device in step 602. This is not limited herein.

For sending, by the positioning management device, the fourth information to the terminal device, refer to the foregoing related description. Details are not described herein again.

603. The terminal device sends second information to the positioning management device based on the fourth information, where the second information includes a second reference signal configuration information set requested by the terminal device, and the second reference signal configuration information set includes one or more pieces of reference signal configuration information.

For step 603, refer to related descriptions in FIG. 4. Details are not described herein again.

For the second information, refer to related descriptions in FIG. 4. Details are not described herein again.

It should be noted that if step 602 is not performed, the terminal device may send the second information to the positioning management device in step 603. This is not limited herein.

It should be noted that, in a possible implementation, there is no specific execution sequence between step 601 and step 603 in this embodiment of this application, and step 601 may be performed before step 603. Alternatively, step 603 may be performed before step 601. Step 601 and step 603 may alternatively be performed at the same time. This is not limited herein.

It can be learned that, in the foregoing technical solution, the terminal device obtains the one or more pieces of reference signal configuration information that may be requested on demand, so as to send, to the positioning management device, the second reference signal configuration information set requested by the terminal device. That is, the terminal device may send the second information with reference to the first information, so that a success rate of requesting reference signal configuration information by the terminal device is increased, thereby meeting a positioning requirement of the terminal device. In addition, the terminal device obtains the fourth information, so that the terminal device may send the second information to the positioning management device based on the latest reference signal configuration information set that is being used by a network in a current phase, and/or information about whether the reference signal configuration information has been requested and successfully configured by another terminal device, and/or information such as reference signal configuration information set that can be requested by the terminal equipment, so that a success rate of requesting the reference signal configuration information by the terminal device is increased, thereby meeting a positioning requirement of the terminal device. In addition, this avoids a problem that power consumption of the terminal device increases and network efficiency decreases because the terminal device frequently requests the reference signal configuration information.

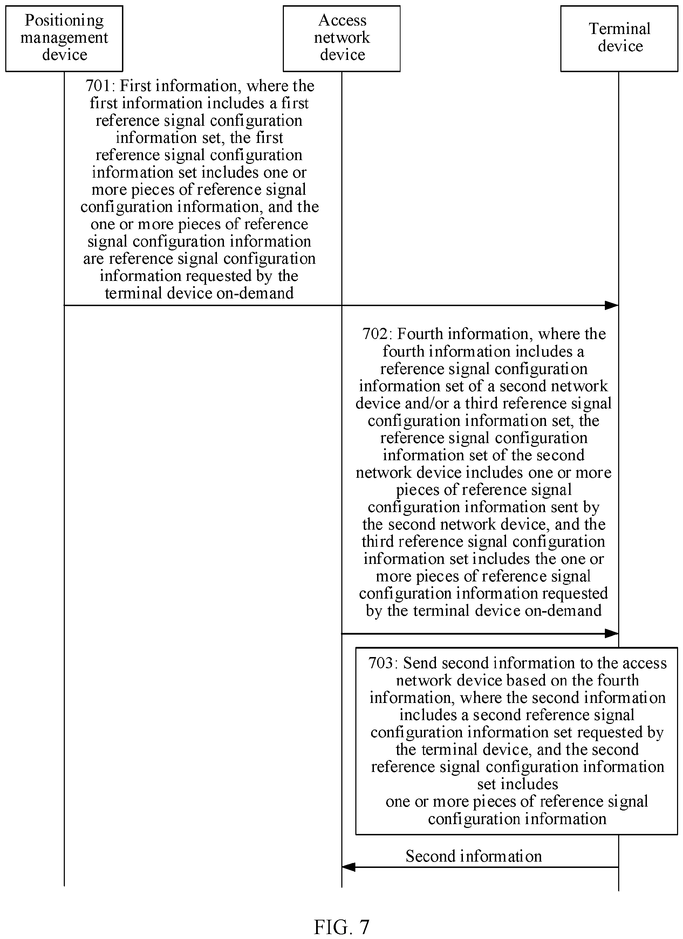

For example, the following describes content of sending first information by a positioning management device to a terminal device and sending second information by the terminal device to an access network device. Specifically, FIG. 7 is a schematic flowchart of still another uplink reference signal resource configuration method according to an embodiment of this application. The terminal device in FIG. 7 may be the terminal device 30 in FIG. 1, the access network device in FIG. 7 may be the access network device 101 in FIG. 1, and the positioning management device in FIG. 7 may be the positioning management device 102 in FIG. 1. As shown in FIG. 7, the method includes but is not limited to the following steps.

701: The terminal device receives first information sent by the positioning management device, where the first information includes a first reference signal configuration information set, the first reference signal configuration information set includes one or more pieces of reference signal configuration information, and the one or more pieces of reference signal configuration information are reference signal configuration information requested by a terminal device on-demand.

For step 701, refer to related descriptions in FIG. 4. Details are not described herein again.

For the first information, refer to related descriptions in FIG. 4. Details are not described herein again.

702: The access network device sends fourth information to the terminal device, where the fourth information includes a reference signal configuration information set of a second network device and/or a third reference signal configuration information set, the reference signal configuration information set of the second network device includes one or more pieces of reference signal configuration information sent by the second network device, and the third reference signal configuration information set includes the one or more pieces of reference signal configuration information requested by the terminal device on-demand.

For the fourth information, refer to the foregoing related description. Details are not described herein again.

It should be noted that in this application, step 702 may or may not be performed. This is not limited herein.

In a possible implementation, the positioning management device may send the fourth information to the terminal device in step 702. This is not limited herein.

For sending, by the positioning management device, the fourth information to the terminal device, refer to the foregoing related description. Details are not described herein again.

703: The terminal device sends second information to the access network device based on the fourth information, where the second information includes a second reference signal configuration information set requested by the terminal device, and the second reference signal configuration information set includes one or more pieces of reference signal configuration information.

For step 703, refer to related descriptions in FIG. 4. Details are not described herein again.

For the second information, refer to related descriptions in FIG. 4. Details are not described herein again.

It should be noted that if step 702 is not performed, the terminal device may send the second information to the access network device in step 703. This is not limited herein.

It should be noted that, in a possible implementation, there is no specific execution sequence between step 701 and step 703 in this embodiment of this application, and step 701 may be performed before step 703. Alternatively, step 703 may be performed before step 701. Step 701 and step 703 may alternatively be performed at the same time. This is not limited herein.

It can be learned that, in the foregoing technical solution, the terminal device obtains the one or more pieces of reference signal configuration information that may be requested on demand, so as to send, to the access network device, the second reference signal configuration information set requested by the terminal device. That is, the terminal device may send the second information with reference to the first information, so that a success rate of requesting reference signal configuration information by the terminal device is increased, thereby meeting a positioning requirement of the terminal device. In addition, the terminal device obtains the fourth information, so that the terminal device may send the second information to the access network device based on the latest reference signal configuration information set that is being used by a network in a current phase, and/or information about whether the reference signal configuration information has been requested and successfully configured by another terminal device, and/or information such as reference signal configuration information set that can be requested by the terminal equipment, so that a success rate of requesting the reference signal configuration information by the terminal device is increased, thereby meeting a positioning requirement of the terminal device. In addition, this avoids a problem that power consumption of the terminal device increases and network efficiency decreases because the terminal device frequently requests the reference signal configuration information.

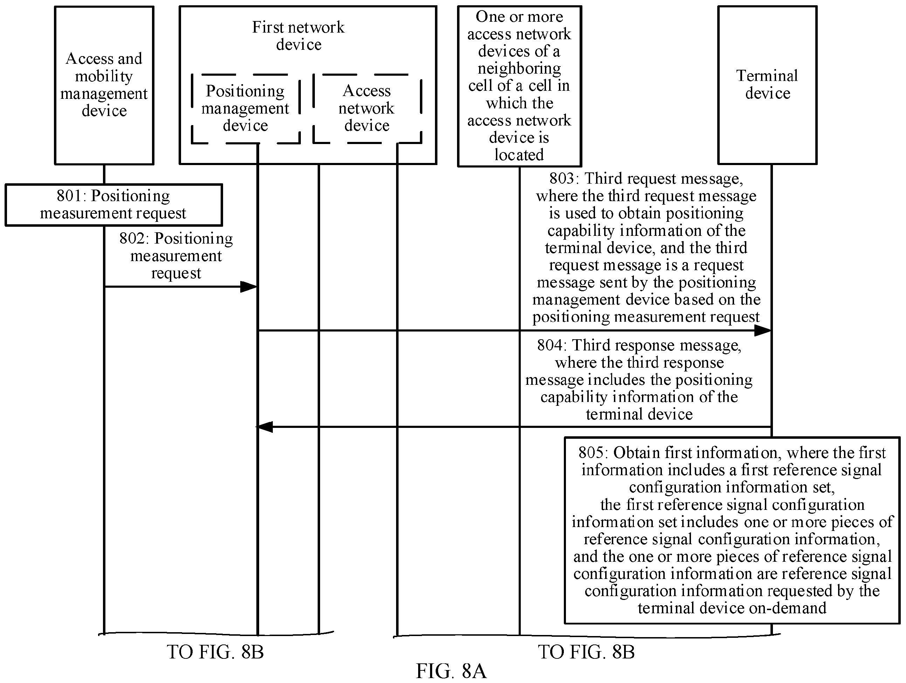

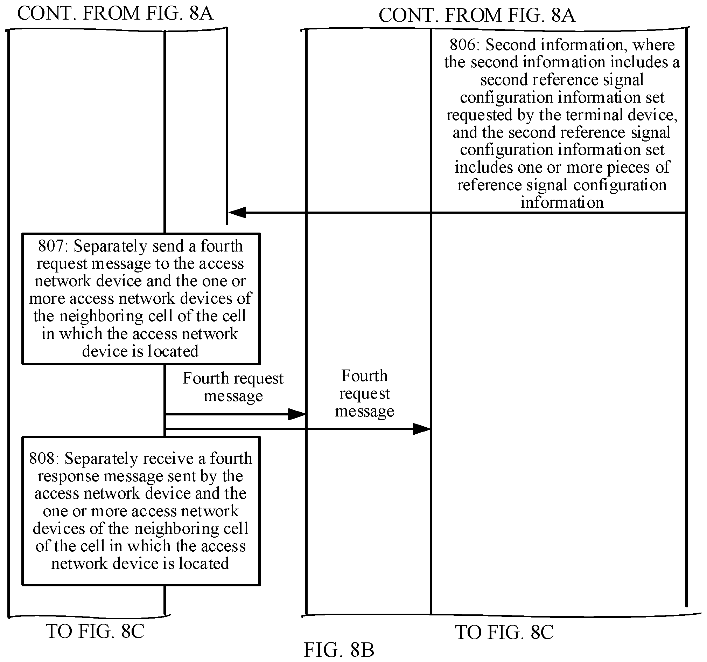

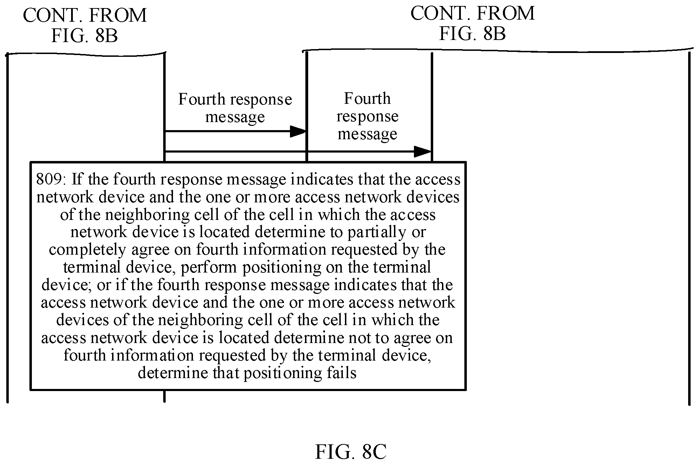

The following describes the technical solutions provided in embodiments of this application with reference to a positioning scenario. FIG. 8A, FIG. 8B, and FIG. 8C are a schematic flowchart of still another communication method based on a reference signal according to an embodiment of this application. The terminal device in FIG. 8A may be the terminal device 30 in FIG. 1, the first network device in FIG. 8A may be the first network device 10 in FIG. 1, and the access and mobility management device in FIG. 8A may be the access and mobility management device 40 in FIG. 1. As shown in FIG. 8A, FIG. 8B, and FIG. 8C, the method includes but is not limited to the following steps.

801: The access and mobility management device obtains a positioning measurement request.

For example, step 801 may include the following steps. The access and mobility management device receives a positioning measurement request sent by the terminal device or a 5G core network LCS entity (for example, a gateway mobile location center (gateway mobile location center, GMLC) network element). This is not limited herein.

For the positioning measurement request, refer to the foregoing related description. Details are not described herein again. In addition, for specific information included in the positioning measurement request, refer to the specification 3GPP TS 38.455. This is not limited herein.

802: The positioning management device receives a positioning measurement request sent by the access and mobility management device.

803: The terminal device receives a third request message sent by the positioning management device, where the third request message is used to obtain positioning capability information of the terminal device, and the third request message is a request message sent by the positioning management device based on the positioning measurement request.

For positioning capability information of the terminal device, refer to 3GPP TS 37.355. Details are not described herein.

The third request message may be an LPP message.

804: The positioning management device receives a third response message sent by the terminal device, where the third response message includes the positioning capability information of the terminal device.

805 and 806 are the same as steps 401 and 402 in FIG. 4. Details are not described herein again.

In a possible implementation, step 805 may be the same as step 501 in FIG. 5, step 601 in FIG. 6, or step 701 in FIG. 7. This is not limited herein. It may be understood that if step 805 is the same as step 501 in FIG. 5, step 806 is the same as step 503 in FIG. 5. If step 805 is the same as step 601 in FIG. 6, step 806 is the same as step 603 in FIG. 6. If step 805 is the same as step 701 in FIG. 7, step 806 is the same as step 703 in FIG. 7. This is not limited herein.

It should be noted that there is no specific execution sequence between step 803 and step 805 in this embodiment of this application, and step 803 may be performed before step 805. Alternatively, step 805 may be performed before step 803. Step 803 and step 805 may alternatively be performed at the same time. This is not limited herein.

For example, in a possible implementation, steps 801 and 802 are first performed, then steps 805 and 806 are performed, then steps 803 and 804 are performed, and then steps 807 and 809 may be performed. This is not limited herein.

807: The positioning management device separately sends a fourth request message to the access network device and one or more access network devices of a neighboring cell of a cell in which the access network device is located.

The fourth request message includes the fourth information, and the fourth request message is used to request the access network device and the one or more access network devices of the neighboring cell of the cell in which the access network device is located to determine whether to agree with the terminal device to request the fourth information.

The fourth request message may be an NRPPa message.

The fourth information may be completely or partially the same as the second information, or the fourth information may be completely different from the second information. This is not limited herein.

808: The positioning management device separately receives a fourth response message sent by the access network device and the one or more access network devices of the neighboring cell of the cell in which the access network device is located.

The fourth response message indicates that the access network device and the one or more access network devices of the neighboring cell of the cell in which the access network device is located determine to partially or completely or not to agree on the fourth information requested by the terminal device.

The fourth response message may be an NRPPa message.

809. If the fourth response message indicates that the access network device and the one or more access network devices of the neighboring cell of the cell in which the access network device is located determine to partially or completely agree on the fourth information requested by the terminal device, the positioning management device performs positioning on the terminal device; or if the fourth response message indicates that the access network device and the one or more access network devices of the neighboring cell of the cell in which the access network device is located determine not to agree on the fourth information requested by the terminal device, the positioning management device determines that positioning fails.

It should be noted that the positioning management device performs positioning on the terminal device. For details, refer to 3GPP TS 37.355. Details are not described herein.

It can be learned that, in the foregoing technical solution, when positioning is involved, the terminal device obtains the one or more pieces of reference signal configuration information that may be requested on-demand, so as to send, to the first network device, the second reference signal configuration information set requested by the terminal device. That is, the terminal device may send the second information with reference to the first information, so that a success rate of requesting reference signal configuration information by the terminal device is increased, thereby meeting a positioning requirement of the terminal device. In addition, the access network device and the one or more access network devices of the neighboring cell of the cell in which the access network device is located needs to evaluate or determine whether the terminal device can use the reference signal configuration information requested by the terminal device. Because the reference signal configuration information requested by the terminal device comes from the first network device, when the access network device and the one or more access network devices in the neighboring cell of the cell in which the access network device is located evaluate or determine whether the terminal device can use the second information, there is a high probability that the terminal device is allowed to use the second information, so that a success rate of requesting the reference signal configuration information by the terminal device is increased, thereby meeting a positioning requirement of the terminal device.

It should be noted that in this application, in the implementations involved in FIG. 4 to FIG. 7, a combination solution of any implementation falls within the protection range of the present invention.

The foregoing mainly describes the solutions provided in this application from the perspective of interaction between devices. It may be understood that, to implement the foregoing functions, the foregoing devices include corresponding hardware structures and/or software modules for performing the functions. A person skilled in the art should easily be aware that the modules and algorithm steps in the examples described with reference to embodiments disclosed in this specification can be implemented in a form of hardware or a combination of hardware and computer software in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the terminal device or the first network device may be divided into function modules based on the foregoing method examples. For example, each function module may be divided based on corresponding functions, or two or more functions may be integrated into one processing module. The foregoing integrated module may be implemented in a form of hardware, or may be implemented in a form of a software function module. Notes: The module division in embodiments of this application is an example, and is merely logical function division. There may be another division manner in an actual implementation.

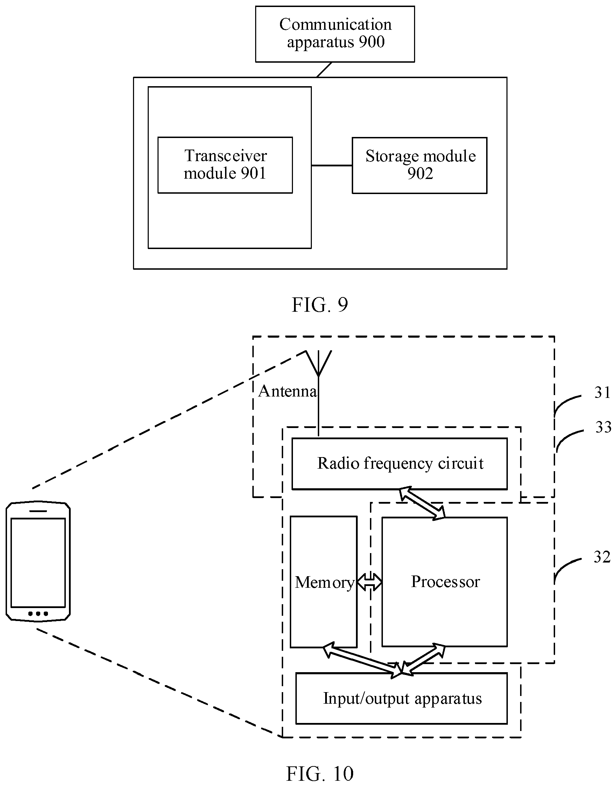

When an integrated module is used, refer to FIG. 9. FIG. 9 is a schematic structural diagram of a communication apparatus according to an embodiment of this application. The communication apparatus 900 may be applied to the method shown in FIG. 4, FIG. 5, FIG. 6, FIG. 7, or FIG. 8A, FIG. 8B, and FIG. 8C. As shown in FIG. 9, the communication apparatus 900 includes a transceiver module 901. The transceiver module 901 may be a transceiver or a communication interface. The communication apparatus may be configured to implement the terminal device or the first network device related to any one of the foregoing method embodiments, or configured to implement a function of the device related to any one of the foregoing method embodiments. For example, the communication apparatus may be the terminal device or the first network device. The terminal device or the first network device may be a network element in a hardware device, a software function running on dedicated hardware, or a virtualization function instantiated on a platform (for example, a cloud platform). Optionally, the communication apparatus 900 may further include a storage module 902, configured to store program code and data of the communication apparatus 900.

For example, when the communication apparatus is used as the terminal device or is a chip applied to the terminal device, the communication apparatus 900 includes a transceiver module 901, and performs the steps performed by the terminal device in the foregoing method embodiment. The transceiver module 901 is configured to support communication with the first network device, and specifically perform a sending and/or receiving action that is performed by the terminal device in FIG. 4, FIG. 5, FIG. 6, FIG. 7, or FIG. 8A, FIG. 8B, and FIG. 8C. Details are not described herein again. For example, the terminal device is supported in performing one or more steps in step 401 and step 503, and/or used in another process of the technology described in this specification.

For example, the transceiver module 901 is configured to: obtain first information, where the first information includes a first reference signal configuration information set, the first reference signal configuration information set includes one or more pieces of reference signal configuration information, and the one or more pieces of reference signal configuration information are reference signal configuration information requested by a terminal device on-demand; and send second information to a first network device, where the second information includes a second reference signal configuration information set requested by the terminal device, and the second reference signal configuration information set includes one or more pieces of reference signal configuration information.

For example, when the communication apparatus is used as the first network device or is a chip applied to the first network device, the communication apparatus 900 includes a transceiver module 901, and performs the steps performed by the network device in the foregoing method embodiment. The transceiver module 901 is configured to support communication with the terminal device, and specifically perform a sending and/or receiving action performed by the first network device in FIG. 4, FIG. 5, FIG. 6, FIG. 7, or FIG. 8A, FIG. 8B, and FIG. 8C. Details are not described herein again. For example, the first network device is supported in performing one or more of step 402, step 502, and/or another process of the technology described in this specification.

For example, the transceiver module 901 is configured to: send first information to the terminal device, where the first information includes a first reference signal configuration information set, the first reference signal configuration information set includes one or more pieces of reference signal configuration information, and the one or more pieces of reference signal configuration information are reference signal configuration information requested by a terminal device on-demand; and receive second information sent by the terminal device, where the second information includes a second reference signal configuration information set requested by the terminal device, and the second reference signal configuration information set includes one or more pieces of reference signal configuration information.

In a possible implementation, when the communication apparatus is a chip, the transceiver module 901 may be an interface, a pin, a circuit, or the like. The interface may be configured to input to-be-processed data to the processor, and may output a processing result of the processor. In a specific implementation, the interface may be a general-purpose input output (general-purpose input output, GPIO) interface, and may be connected to a plurality of peripheral devices (such as a display (LCD), a camera (camera), a radio frequency (radio frequency, RF) module, and an antenna). The interface is connected to the processor through a bus.

The storage module 902 may be a storage module in the chip, for example, a register or a cache. Alternatively, the storage module may be a storage module located outside the chip, for example, a read-only memory (Read-Only Memory, ROM), another type of static storage device that can store static information and an instruction, or a random access memory (Random Access Memory, RAM), or the like.

It should be noted that functions corresponding to the processor and the interface may be implemented by using hardware design, or may be implemented by using software design, or may be implemented by combining software and hardware. This is not limited herein.

FIG. 10 is a schematic structural diagram of a simplified terminal device according to an embodiment of this application. For ease of understanding and convenience of figure illustration, for example, the terminal device is a mobile phone in FIG. 10. As shown in FIG. 10, the terminal device includes at least one processor, and may further include a radio frequency circuit, an antenna, and an input/output apparatus. The processor may be configured to process a communication protocol and communication data, and may be further configured to control the terminal device, execute a software program, process data of the software program, and the like. The terminal device may further include a memory. The memory is mainly configured to store a software program and data. These related programs may be reloaded into the memory when the communication apparatus is delivered from the factory, or may be reloaded into the memory when required later. The radio frequency circuit is mainly configured to convert a baseband signal and a radio frequency signal and process the radio frequency signal. The antenna is mainly configured to receive and send the radio frequency signal in a form of an electromagnetic wave. The input/output apparatus, such as a touchscreen, a display screen, or a keyboard, is mainly configured to receive data entered by a user and output data to the user. Notes: Some types of terminal devices may not have an input/output apparatus.

When data needs to be sent, the processor performs baseband processing on the to-be-sent data, and outputs a baseband signal to the radio frequency circuit. The radio frequency circuit performs radio frequency processing on the baseband signal, and then sends the radio frequency signal to the outside by using the antenna in a form of an electromagnetic wave. When data is sent to the terminal device, the radio frequency circuit receives a radio frequency signal through the antenna, converts the radio frequency signal into a baseband signal, and outputs the baseband signal to the processor. The processor converts the baseband signal into data, and processes the data. For ease of description, FIG. 10 shows only one memory and one processor. In an actual terminal device product, there may be one or more processors and one or more memories. The memory may also be referred to as a storage medium, a storage device, or the like. The memory may be disposed independently of the processor, or may be integrated with the processor. This is not limited in this embodiment of this application.

In this embodiment of this application, an antenna and a radio frequency circuit having a transceiver function may be considered as a receiving unit and a sending unit (or may be collectively referred to as a transceiver unit) of the terminal device, and a processor having a processing function may be considered as a processing unit of the terminal device. As shown in FIG. 10, the terminal device includes a receiving module 31, a processing module 32, and a sending module 33. The receiving module 31 may also be referred to as a receiver, a receiving machine, a receiving circuit, or the like, and the sending module 33 may also be referred to as a sending machine, a transmitter, a transmitting machine, a transmitter circuit, or the like. The processing module 32 may also be referred to as a processor, a processing board, a processing apparatus, or the like.

For example, the processing module 32 is configured to perform a function of the terminal device in the embodiment shown in FIG. 4, FIG. 5, FIG. 6, FIG. 7, or FIG. 8A, FIG. 8B, and FIG. 8C.

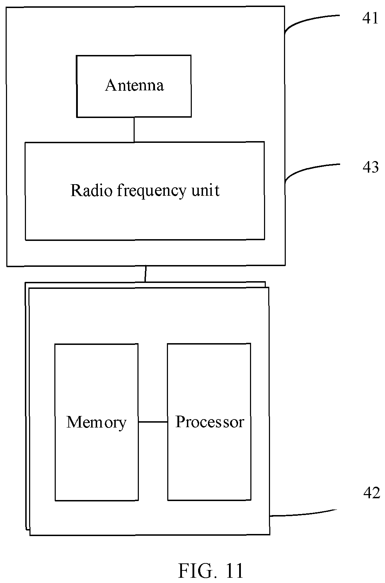

FIG. 11 is a schematic structural diagram of a simplified access network device according to an embodiment of this application. The access network device includes a radio frequency signal receiving/sending and converting part and a part 42. The radio frequency signal receiving/sending and converting part further includes a receiving module 41 part and a sending module 43 part (which may also be collectively referred to as a transceiver module). The radio frequency signal receiving/sending and converting part is mainly used for receiving/sending radio frequency signals and converting radio frequency signals and baseband signals. The part 42 is mainly used for baseband processing, and controls an access network device, and the like. The receiving module 41 may also be referred to as a receiver, a receiving machine, a receiving circuit, or the like, and the sending module 43 may also be referred to as a sending machine, a transmitter, a transmitting machine, a transmitter circuit, or the like. The part 42 is usually a control center of the access network device, may be generally referred to as a processing module, and is configured to control the access network device to perform the steps performed by the access network device in FIG. 4, FIG. 5, FIG. 6, FIG. 7, or FIG. 8A, FIG. 8B, and FIG. 8C. For details, refer to the description of the foregoing related parts.

The part 42 may include one or more boards. Each board may include one or more processors and one or more memories. The processor is configured to read and execute a program in the memory to implement a baseband processing function and control the access network device. If there are multiple boards, the boards can be interconnected to increase the processing capability. In an optional implementation, multiple boards may share one or more processors, or multiple boards share one or more memories, or multiple boards share one or more processors at the same time.

For example, for the access network device, the sending module 43 is configured to perform a function of the access network device in embodiments shown in FIG. 4, FIG. 5, FIG. 6, FIG. 7, or FIG. 8A, FIG. 8B, and FIG. 8C.

This application further provides a communication apparatus, including a memory and a processor. The memory is configured to store a computer-executable instruction, and the processor is configured to execute the computer-executable instruction stored in the memory. In addition, execution of the computer-executable instruction stored in the memory causes the processor to perform the method in any possible implementation in FIG. 4, FIG. 5, FIG. 6, FIG. 7, or FIG. 8A, FIG. 8B, and FIG. 8C.

This application further provides still another communication apparatus, including a memory and a communication interface. The communication interface is configured to input and/or output information, and the processor is configured to execute a computer program, so that the apparatus performs the method in any possible implementation of FIG. 4, FIG. 5, FIG. 6, FIG. 7, or FIG. 8A, FIG. 8B, and FIG. 8C.

This application further provides a computer-readable storage medium. The computer-readable storage medium stores a computer program. When the computer program is executed by a computer, the computer implements the method in any possible implementation of FIG. 4, FIG. 5, FIG. 6, FIG. 7, or FIG. 8A, FIG. 8B, and FIG. 8C.

The units described as separate parts may or may not be physically separate, and parts displayed as units may or may not be physical units, may be located in one position, or may be distributed on a plurality of network units. Some or all of the units may be selected based on an actual requirement to implement the objectives of the solutions in embodiments of this application. In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on this understanding, the technical solutions of this application essentially, or the part contributing to the prior art, or all or some of technical solutions may be embodied in a form of a software product. The computer software product is stored in a storage medium, and includes several instructions used to cause a computer device (the computer device can be a personal computer, cloud server, or network device) to perform all or some of the steps of the foregoing methods in embodiments of this application. The foregoing storage medium includes: various media that can store program code, such as a U disk, a removable hard disk, a read-only memory (ROM, Read-Only Memory), a random access memory (RAM, Random Access Memory), a magnetic disk, or an optical disc. The foregoing descriptions are merely specific implementations of this application, but are not intended to limit the protection range of this application. Any person skilled in the art can easily think of various equivalent modifications or replacements within the technical scope disclosed in this application. These modifications or replacements shall fall within the protection range of this application. Therefore, the protection range of this application shall be subject to the protection range of the claims.

## Claims

1. A communication method based on a reference signal, comprising:
obtaining first information, wherein the first information comprises a first reference signal configuration information set, the first reference signal configuration information set comprises one or more pieces of reference signal configuration information, and the one or more pieces of reference signal configuration information are reference signal configuration information requested by a terminal device on-demand; and
sending second information to a first network device, wherein the second information comprises a second reference signal configuration information set requested by the terminal device, and the second reference signal configuration information set comprises one or more pieces of reference signal configuration information.

2. The method according to claim 1, wherein all or partial reference signal configuration information in the second reference signal configuration information set is comprised in the first reference signal configuration information set.

3. The method according to claim 1 or 2, wherein the method further comprises:
receiving third information sent by the first network device, wherein the third information indicates the terminal device to send the second information to the first network device when a preset condition is met.

4. The method according to claim 3, wherein the third information comprises one or more of the following: a preset first reference signal strength, a preset second reference signal strength, a preset third reference signal strength, a preset first measurement result error, a preset second measurement result error, a preset third measurement result error, a preset first positioning precision, a preset second positioning precision, a preset third positioning precision, a preset first positioning precision error, a preset second positioning precision error, and a preset third positioning precision error.

5. The method according to claim 3 or 4, wherein the preset condition comprises one or more of the following:
a reference signal strength measured by the terminal device is less than or equal to the preset first reference signal strength;
a measurement result error of the terminal device is greater than or equal to the preset first measurement result error;
a positioning precision measured by the terminal device is less than or equal to the preset first positioning precision; and
a positioning precision error measured by the terminal device is greater than or equal to the preset first positioning precision error.

6. The method according to claim 3 or 4, wherein the preset condition comprises one or more of the following:
a reference signal strength measured by the terminal device is less than or equal to the preset second reference signal strength, and the reference signal strength measured by the terminal device is greater than or equal to the preset third reference signal strength;
a measurement result error of the terminal device is less than or equal to the preset second measurement result error, and the measurement result error of the terminal device is greater than or equal to the preset third measurement result error;
a positioning precision measured by the terminal device is less than or equal to the preset second positioning precision, and the positioning precision measured by the terminal device is greater than or equal to the preset third positioning precision; and
a positioning precision error measured by the terminal device is less than or equal to the preset second positioning precision error, and the positioning precision error measured by the terminal device is greater than or equal to the preset third positioning precision error.

7. The method according to any one of claims 1 to 6, wherein the method further comprises:
receiving fourth information sent by a second network device, wherein the fourth information comprises a reference signal configuration information set of the second network device and/or a third reference signal configuration information set, the reference signal configuration information set of the second network device comprises one or more pieces of reference signal configuration information sent by the second network device, and the third reference signal configuration information set comprises the one or more pieces of reference signal configuration information requested by the terminal device on-demand; and
the sending second information to a first network device comprises:
sending the second information to the first network device based on the fourth information.

8. The method according to claim 7, wherein all or partial reference signal configuration information in the third reference signal configuration information set is comprised in the first reference signal configuration information set.

9. The method according to any one of claims 1 to 8, wherein the first information comprises first assistance information, and the first assistance information comprises one or more of the following information: one or more pieces of frequency layer information, one or more pieces of sending-receiving node information, one or more pieces of reference signal resource set information, and one or more pieces of reference signal resource information.

10. The method according to any one of claims 1 to 9, wherein the first information comprises second assistance information, the second assistance information is predefined assistance information, and the second assistance information comprises one or more of the following information: one or more pieces of frequency layer information, one or more pieces of sending-receiving node information, one or more pieces of reference signal resource set information, and one or more pieces of reference signal resource information.

11. The method according to claim 9 or 10, wherein the frequency layer information comprises one or more of the following information: frequency layer identification information, subcarrier spacing information, bandwidth information, a start physical resource block location, frequency information, spacing information, cyclic prefix information, and the sending-receiving node information.

12. The method according to any one of claims 9 to 11, wherein the sending-receiving node information comprises one or more of the following information: reference signal identification information, cell identification information, frequency information, reference signal sending start time information, reference signal time difference RSTD information, reference signal time difference uncertainty RSTD-uncertainty information, and the reference signal resource set information.

13. The method according to any one of claims 9 to 12, wherein the reference signal resource set information comprises one or more of the following information: reference signal resource set identification information, periodicity information, interval information, density information, a symbol quantity, information indicating that simultaneous sending is not supported, information indicating that simultaneous receiving is not supported, power information, and the reference signal resource information; the information indicating that simultaneous sending is not supported means that during sending of the reference signal by the terminal, sending of other information or a reference signal other than the reference signal is not supported; and the information indicating that simultaneous receiving is not supported means that during receiving of the reference signal, receiving of other information or a reference signal other than the reference signal is not supported.

14. The method according to any one of claims 9 to 13, wherein the reference signal resource information comprises one or more of the following information: a reference signal resource identifier, reference signal sequence identification information, interval information, and reference signal resource sending/receiving start time information.

15. The method according to claim 9, wherein the first assistance information is comprised in signaling NR-DL-PRS-AssistanceData-rl6.

16. The method according to any one of claims 1 to 15, wherein the second information further comprises one or more of the following: a priority of a frequency layer, a priority of a sending-receiving node, a priority of a reference signal resource set, and a priority of a reference signal resource.

17. The method according to any one of claims 1 to 16, wherein the second information further comprises one or more of the following: an identifier of a secondary cell, an identifier of an activated bandwidth part BWP resource of the secondary cell, configuration information of the activated BWP resource of the secondary cell, an identifier of a deactivated BWP resource of the secondary cell, and configuration information of the deactivated BWP resource of the secondary cell.

18. A communication method based on a reference signal, comprising:
sending first information to a terminal device, wherein the first information comprises a first reference signal configuration information set, the first reference signal configuration information set comprises one or more pieces of reference signal configuration information, and the one or more pieces of reference signal configuration information are reference signal configuration information requested by the terminal device on-demand; and
receiving second information sent by the terminal device, wherein the second information comprises a second reference signal configuration information set requested by the terminal device, and the second reference signal configuration information set comprises one or more pieces of reference signal configuration information.

19. The method according to claim 18, wherein all or partial reference signal configuration information in the second reference signal configuration information set is comprised in the first reference signal configuration information set.

20. The method according to claim 18 or 19, wherein the method further comprises:
sending third information to the terminal device, wherein the third information indicates the terminal device to send the second information to the first network device when a preset condition is met.

21. The method according to claim 20, wherein the third information comprises one or more of the following: a preset first reference signal strength, a preset second reference signal strength, a preset third reference signal strength, a preset first measurement result error, a preset second measurement result error, a preset third measurement result error, a preset first positioning precision, a preset second positioning precision, a preset third positioning precision, a preset first positioning precision error, a preset second positioning precision error, and a preset third positioning precision error.

22. The method according to claim 20 or 21, wherein the preset condition comprises one or more of the following:
a reference signal strength measured by the terminal device is less than or equal to the preset first reference signal strength;
a measurement result error of the terminal device is greater than or equal to the preset first measurement result error;
a positioning precision measured by the terminal device is less than or equal to the preset first positioning precision; and
a positioning precision error measured by the terminal device is greater than or equal to the preset first positioning precision error.

23. The method according to claim 20 or 21, wherein the preset condition comprises one or more of the following:
a reference signal strength measured by the terminal device is less than or equal to the preset second reference signal strength, and the reference signal strength measured by the terminal device is greater than or equal to the preset third reference signal strength;
a measurement result error of the terminal device is less than or equal to the preset second measurement result error, and the measurement result error of the terminal device is greater than or equal to the preset third measurement result error;
a positioning precision measured by the terminal device is less than or equal to the preset second positioning precision, and the positioning precision measured by the terminal device is greater than or equal to the preset third positioning precision; and
a positioning precision error measured by the terminal device is less than or equal to the preset second positioning precision error, and the positioning precision error measured by the terminal device is greater than or equal to the preset third positioning precision error.

24. The method according to any one of claims 18 to 23, wherein the receiving second information sent by the terminal device comprises:
receiving the second information sent by the terminal device, wherein the second information is determined based on fourth information, the fourth information comprises a reference signal configuration information set of the second network device and/or a third reference signal configuration information set, the reference signal configuration information set of the second network device comprises one or more pieces of reference signal configuration information sent by the second network device, and the third reference signal configuration information set comprises the one or more pieces of reference signal configuration information requested by the terminal device on-demand; and the fourth information is sent by the second network device.

25. The method according to claim 24, wherein a trigger condition for sending the fourth information is that the reference signal configuration information set of the second network device changes.

26. The method according to claim 24 or 25, wherein all or partial reference signal configuration information in the third reference signal configuration information set is comprised in the first reference signal configuration information set.

27. The method according to any one of claims 18 to 26, wherein the first information comprises first assistance information, and the first assistance information comprises one or more of the following information: one or more pieces of frequency layer information, one or more pieces of sending-receiving node information, one or more pieces of reference signal resource set information, and one or more pieces of reference signal resource information.

28. The method according to claim 27, wherein the frequency layer information comprises one or more of the following information: frequency layer identification information, subcarrier spacing information, bandwidth information, a start physical resource block location, frequency information, spacing information, cyclic prefix information, and the sending-receiving node information.

29. The method according to claim 27 or 28, wherein the sending-receiving node information comprises one or more of the following information: reference signal identification information, cell identification information, frequency information, reference signal sending start time information, reference signal time difference RSTD information, reference signal time difference uncertainty RSTD-uncertainty information, and the reference signal resource set information.

30. The method according to any one of claims 27 to 29, wherein the reference signal resource set information comprises one or more of the following information: reference signal resource set identification information, periodicity information, interval information, density information, a symbol quantity, information indicating that simultaneous sending is not supported, information indicating that simultaneous receiving is not supported, power information, and the reference signal resource information; the information indicating that simultaneous sending is not supported means that during sending of the reference signal by the terminal, sending of other information or a reference signal other than the reference signal is not supported; and the information indicating that simultaneous receiving is not supported means that during receiving of the reference signal, receiving of other information or a reference signal other than the reference signal is not supported.

31. The method according to any one of claims 27 to 30, wherein the reference signal resource information comprises one or more of the following information: a reference signal resource identifier, reference signal sequence identification information, interval information, and reference signal sending/receiving start time information.

32. The method according to claim 27, wherein the first assistance information is comprised in signaling NR-DL-PRS-AssistanceData-r16.

33. The method according to any one of claims 18 to 32, wherein the second information further comprises one or more of the following: a priority of a frequency layer, a priority of a sending-receiving node, a priority of a reference signal resource set, and a priority of a reference signal resource.

34. The method according to any one of claims 18 to 33, wherein the second information further comprises one or more of the following: an identifier of a secondary cell, an identifier of an activated bandwidth part BWP resource of the secondary cell, configuration information of the activated BWP resource of the secondary cell, an identifier of a deactivated BWP resource of the secondary cell, and configuration information of the deactivated BWP resource of the secondary cell.

35. A communication apparatus, comprising a transceiver module, wherein the transceiver module is configured to:
obtain first information, wherein the first information comprises a first reference signal configuration information set, the first reference signal configuration information set comprises one or more pieces of reference signal configuration information, and the one or more pieces of reference signal configuration information are reference signal configuration information requested by a terminal device on-demand; and
send second information to a first network device, wherein the second information comprises a second reference signal configuration information set requested by the terminal device, and the second reference signal configuration information set comprises one or more pieces of reference signal configuration information.

36. The apparatus according to claim 35, wherein all or partial reference signal configuration information in the second reference signal configuration information set is comprised in the first reference signal configuration information set.

37. The apparatus according to claim 35 or 36, wherein the transceiver module is further configured to receive third information sent by the first network device, wherein the third information indicates the terminal device to send the second information to the first network device when a preset condition is met.

38. The apparatus according to claim 37, wherein the third information comprises one or more of the following: a preset first reference signal strength, a preset second reference signal strength, a preset third reference signal strength, a preset first measurement result error, a preset second measurement result error, a preset third measurement result error, a preset first positioning precision, a preset second positioning precision, a preset third positioning precision, a preset first positioning precision error, a preset second positioning precision error, and a preset third positioning precision error.

39. The apparatus according to claim 37 or 38, wherein the preset condition comprises one or more of the following:
a reference signal strength measured by the terminal device is less than or equal to the preset first reference signal strength;
a measurement result error of the terminal device is greater than or equal to the preset first measurement result error;
a positioning precision measured by the terminal device is less than or equal to the preset first positioning precision; and
a positioning precision error measured by the terminal device is greater than or equal to the preset first positioning precision error.

40. The apparatus according to claim 37 or 38, wherein the preset condition comprises one or more of the following:
a reference signal strength measured by the terminal device is less than or equal to the preset second reference signal strength, and the reference signal strength measured by the terminal device is greater than or equal to the preset third reference signal strength;
a measurement result error of the terminal device is less than or equal to the preset second measurement result error, and the measurement result error of the terminal device is greater than or equal to the preset third measurement result error;
a positioning precision measured by the terminal device is less than or equal to the preset second positioning precision, and the positioning precision measured by the terminal device is greater than or equal to the preset third positioning precision; and
a positioning precision error measured by the terminal device is less than or equal to the preset second positioning precision error, and the positioning precision error measured by the terminal device is greater than or equal to the preset third positioning precision error.

41. The apparatus according to any one of claims 35 to 40, wherein
the transceiver module is further configured to receive fourth information sent by a second network device, wherein the fourth information comprises a reference signal configuration information set of the second network device and/or a third reference signal configuration information set, the reference signal configuration information set of the second network device comprises one or more pieces of reference signal configuration information sent by the second network device, and the third reference signal configuration information set comprises the one or more pieces of reference signal configuration information requested by the terminal device on-demand; and
during sending of the second information to the first network device, the transceiver module is configured to send the second information to the first network device based on the fourth information.

42. The apparatus according to claim 41, wherein all or partial reference signal configuration information in the third reference signal configuration information set is comprised in the first reference signal configuration information set.

43. The apparatus according to any one of claims 35 to 42, wherein the first information comprises first assistance information, and the first assistance information comprises one or more of the following information: one or more pieces of frequency layer information, one or more pieces of sending-receiving node information, one or more pieces of reference signal resource set information, and one or more pieces of reference signal resource information.

44. The apparatus according to any one of claims 35 to 43, wherein the first information comprises second assistance information, the second assistance information is predefined assistance information, and the second assistance information comprises one or more of the following information: one or more pieces of frequency layer information, one or more pieces of sending-receiving node information, one or more pieces of reference signal resource set information, and one or more pieces of reference signal resource information.

45. The apparatus according to any one of claims 35 to 44, wherein the frequency layer information comprises one or more of the following information: frequency layer identification information, subcarrier spacing information, bandwidth information, a start physical resource block location, frequency information, spacing information, cyclic prefix information, and the sending-receiving node information.

46. The apparatus according to any one of claims 35 to 45, wherein the sending-receiving node information comprises one or more of the following information: reference signal identification information, cell identification information, frequency information, reference signal sending start time information, reference signal time difference RSTD information, reference signal time difference uncertainty RSTD-uncertainty information, and the reference signal resource set information.

47. The apparatus according to any one of claims 35 to 46, wherein the reference signal resource set information comprises one or more of the following information: reference signal resource set identification information, periodicity information, interval information, density information, a symbol quantity, information indicating that simultaneous sending is not supported, information indicating that simultaneous receiving is not supported, power information, and the reference signal resource information; the information indicating that simultaneous sending is not supported means that during sending of the reference signal by the terminal, sending of other information or a reference signal other than the reference signal is not supported; and the information indicating that simultaneous receiving is not supported means that during receiving of the reference signal, receiving of other information or a reference signal other than the reference signal is not supported.

48. The apparatus according to any one of claims 35 to 47, wherein the reference signal resource information comprises one or more of the following information: a reference signal resource identifier, reference signal sequence identification information, interval information, and reference signal resource sending/receiving start time information.

49. The method according to claim 43, wherein the first assistance information is comprised in signaling NR-DL-PRS-AssistanceData-r16.

50. The method according to any one of claims 35 to 49, wherein the second information further comprises one or more of the following: a priority of a frequency layer, a priority of a sending-receiving node, a priority of a reference signal resource set, and a priority of a reference signal resource.

51. The method according to any one of claims 35 to 50, wherein the second information further comprises one or more of the following: an identifier of a secondary cell, an identifier of an activated bandwidth part BWP resource of the secondary cell, configuration information of the activated BWP resource of the secondary cell, an identifier of a deactivated BWP resource of the secondary cell, and configuration information of the deactivated BWP resource of the secondary cell.

52. A communication apparatus, comprising a transceiver module, wherein the transceiver module is configured to:
send first information to a terminal device, wherein the first information comprises a first reference signal configuration information set, the first reference signal configuration information set comprises one or more pieces of reference signal configuration information, and the one or more pieces of reference signal configuration information are reference signal configuration information requested by the terminal device on-demand; and
receive second information sent by the terminal device, wherein the second information comprises a second reference signal configuration information set requested by the terminal device, and the second reference signal configuration information set comprises one or more pieces of reference signal configuration information.

53. The apparatus according to claim 52, wherein all or partial reference signal configuration information in the second reference signal configuration information set is comprised in the first reference signal configuration information set.

54. The apparatus according to claim 52 or 53, wherein the transceiver module is further configured to send third information to the terminal device, wherein the third information indicates the terminal device to send the second information to the first network device when a preset condition is met.

55. The apparatus according to claim 54, wherein the third information comprises one or more of the following: a preset first reference signal strength, a preset second reference signal strength, a preset third reference signal strength, a preset first measurement result error, a preset second measurement result error, a preset third measurement result error, a preset first positioning precision, a preset second positioning precision, a preset third positioning precision, a preset first positioning precision error, a preset second positioning precision error, and a preset third positioning precision error.

56. The apparatus according to claim 54 or 55, wherein the preset condition comprises one or more of the following:
a reference signal strength measured by the terminal device is less than or equal to the preset first reference signal strength;
a measurement result error of the terminal device is greater than or equal to the preset first measurement result error;
a positioning precision measured by the terminal device is less than or equal to the preset first positioning precision; and
a positioning precision error measured by the terminal device is greater than or equal to the preset first positioning precision error.

57. The apparatus according to claim 54 or 55, wherein the preset condition comprises one or more of the following:
a reference signal strength measured by the terminal device is less than or equal to the preset second reference signal strength, and the reference signal strength measured by the terminal device is greater than or equal to the preset third reference signal strength;
a measurement result error of the terminal device is less than or equal to the preset second measurement result error, and the measurement result error of the terminal device is greater than or equal to the preset third measurement result error;
a positioning precision measured by the terminal device is less than or equal to the preset second positioning precision, and the positioning precision measured by the terminal device is greater than or equal to the preset third positioning precision; and
a positioning precision error measured by the terminal device is less than or equal to the preset second positioning precision error, and the positioning precision error measured by the terminal device is greater than or equal to the preset third positioning precision error.

58. The apparatus according to any one of claims 52 to 57, wherein during receiving of the second information sent by the terminal device, the transceiver module is configured to:
receive the second information sent by the terminal device, wherein the second information is determined based on fourth information, the fourth information comprises a reference signal configuration information set of the second network device and/or a third reference signal configuration information set, the reference signal configuration information set of the second network device comprises one or more pieces of reference signal configuration information sent by the second network device, and the third reference signal configuration information set comprises the one or more pieces of reference signal configuration information requested by the terminal device on-demand; and the fourth information is sent by the second network device.

59. The apparatus according to claim 58, wherein a trigger condition for sending the fourth information is that the reference signal configuration information set of the second network device changes.

60. The apparatus according to claim 58 or 59, wherein all or partial reference signal configuration information in the third reference signal configuration information set is comprised in the first reference signal configuration information set.

61. The apparatus according to any one of claims 52 to 60, wherein the first information comprises first assistance information, and the first assistance information comprises one or more of the following information: one or more pieces of frequency layer information, one or more pieces of sending-receiving node information, one or more pieces of reference signal resource set information, and one or more pieces of reference signal resource information.

62. The apparatus according to any one of claims 52 to 61, wherein the first information comprises second assistance information, the second assistance information is predefined assistance information, and the second assistance information comprises one or more of the following information: one or more pieces of frequency layer information, one or more pieces of sending-receiving node information, one or more pieces of reference signal resource set information, and one or more pieces of reference signal resource information.

63. The apparatus according to any one of claims 52 to 62, wherein the frequency layer information comprises one or more of the following information: frequency layer identification information, subcarrier spacing information, bandwidth information, a start physical resource block location, frequency information, spacing information, cyclic prefix information, and the sending-receiving node information.

64. The apparatus according to any one of claims 52 to 63, wherein the sending-receiving node information comprises one or more of the following information: reference signal identification information, cell identification information, frequency information, reference signal sending start time information, reference signal time difference RSTD information, reference signal time difference uncertainty RSTD-uncertainty information, and the reference signal resource set information.

65. The apparatus according to any one of claims 52 to 64, wherein the reference signal resource set information comprises one or more of the following information: reference signal resource set identification information, periodicity information, interval information, density information, a symbol quantity, information indicating that simultaneous sending is not supported, information indicating that simultaneous receiving is not supported, power information, and the reference signal resource information; the information indicating that simultaneous sending is not supported means that during sending of the reference signal by the terminal, sending of other information or a reference signal other than the reference signal is not supported; and the information indicating that simultaneous receiving is not supported means that during receiving of the reference signal, receiving of other information or a reference signal other than the reference signal is not supported.

66. The apparatus according to any one of claims 52 to 65, wherein the reference signal resource information comprises one or more of the following information: a reference signal resource identifier, reference signal sequence identification information, interval information, and reference signal resource sending/receiving start time information.

67. The method according to claim 61, wherein the first assistance information is comprised in signaling NR-DL-PRS-AssistanceData-r16.

68. The method according to any one of claims 52 to 67, wherein the second information further comprises one or more of the following: a priority of a frequency layer, a priority of a sending-receiving node, a priority of a reference signal resource set, and a priority of a reference signal resource.

69. The method according to any one of claims 52 to 68, wherein the second information further comprises one or more of the following: an identifier of a secondary cell, an identifier of an activated bandwidth part BWP resource of the secondary cell, configuration information of the activated BWP resource of the secondary cell, an identifier of a deactivated BWP resource of the secondary cell, and configuration information of the deactivated BWP resource of the secondary cell.

70. A communication apparatus, comprising a memory and a processor, wherein the memory is configured to store a computer-executable instruction, the processor is configured to execute the computer-executable instruction stored in the memory, and execution of the computer-executable instruction stored in the memory causes the processor to perform the method according to any one of claims 1 to 17 or the method according to any one of claims 18 to 34.

71. A communication apparatus, comprising a processor and a communication interface, the communication interface is configured to input and/or output information, and the processor is configured to execute a computer program, so that the apparatus performs the method according to any one of claims 1 to 17 or the method according to any one of claims 18 to 34.

72. A computer-readable storage medium, storing a computer program thereon, wherein the computer program, when executed by a computer, causes the computer to implement the method according to any one of claims 1 to 17 or the method according to any one of claims 18 to 34.

73. A communication system, comprising the terminal device according to any one of claims 1 to 17 and the first network device according to any one of claims 18 to 34.
